# EUROPEAN PATENT APPLICATION

(11) **EP 4 697 798 A1**
(43) Date of publication of application: **18.02.2026**
(21) Application number: 24802663.5
(22) Date of filing: 08.04.2024
(51) Int. Cl.: H04W 28/16

(54) **COMMUNICATION METHOD AND COMMUNICATION APPARATUS**

(30) Priority: 06.05.2023 CN 202310506337
(71) Applicant: Huawei Technologies Co., Ltd., Shenzhen, Guangdong 518129 (CN)
(72) Inventor: ZHANG, Roujia, Shenzhen, Guangdong 518129 (CN); SUN, Fei, Shenzhen, Guangdong 518129 (CN); ZHU, Yuanping, Shenzhen, Guangdong 518129 (CN); SHI, Yulong, Shenzhen, Guangdong 518129 (CN)
(74) Representative: Pfenning, Meinig & Partner mbB
(86) International application number: PCT/CN2024/086523
(87) International publication number: WO 2024/230376

(57) **Abstract**

This application provides a communication method, including: A terminal device accessing a first relay node sends first information to a core network device, to request, from the core network device, a service corresponding to a first network slice. A second donor node sends second information to the core network device, to indicate to the core network device that the first relay node supports the first network slice, where the first network slice is not supported by a second TA, and a tracking area in which the terminal device is located is the second TA when a donor node of the first relay node is the second donor node. Correspondingly, when the core network device sends first allowed NSSAI to the terminal device based on indication of the second information, the first allowed NSSAI includes an identifier of the first network slice. In this method, because the core network device sends the first allowed NSSAI based on the network slice that is actually supported by the first relay node and that is indicated by the second information, a success rate of requesting the service of the first network slice by the terminal device is improved.

## Description

This application claims priority to Chinese Patent Application No. 202310506337.9, filed with the China National Intellectual Property Administration on May 6, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

A terminal device may include, in a registration request message, a slice identifier of a network slice (slice) service that needs to be requested, to request a specific slice service from a core network device. Correspondingly, after receiving the registration request message including the slice identifier, the core network device needs to determine whether an access network side supports the slice service requested by the terminal device.

Currently, the core network device determines, in the following implementation, whether the access network side supports the slice service requested by the terminal device: obtaining a tracking area (tracking area, TA) in which the terminal device is located; obtaining a network slice list (slice list) that is reported by the access network side and that is supported by the TA; determining whether the slice identifier of the slice service requested by the terminal device is included in the slice list; and if the slice identifier of the slice service requested by the terminal device is included, determining that the access network side supports the slice service requested by the terminal device; or if the slice identifier of the slice service requested by the terminal device is not included, determining that the access network side does not support the slice service requested by the terminal device.

However, in the foregoing method, there may be a problem that a success rate of requesting the network slice service by the terminal device is low.

### SUMMARY

This application provides a communication method and a communication apparatus, to improve a success rate of requesting a network slice service by a terminal device.

According to a first aspect, this application provides a communication method, applied to a core network device or a chip in a core network device, and including: receiving first information from a terminal device, where the first information is used for requesting a service corresponding to a first network slice, and the terminal device accesses a first relay node; receiving second information from a second donor node, where the second information indicates that the first relay node supports the first network slice, the first network slice is not supported by a second tracking area TA, and a tracking area in which the terminal device is located is the second TA when a donor node of the first relay node is the second donor node; and sending first allowed network slice selection assistance information NSSAI to the terminal device and/or the second donor node, where the first allowed NSSAI includes an identifier of the first network slice.

In this implementation, the first network slice is supported by the first relay node, but is not supported by the second TA.

The second TA is the tracking area in which the terminal device is located when the donor node of the first relay node is the second donor node.

The terminal device is a terminal device that accesses the first relay node and is stationary relative to the first relay node, and is also referred to as an on-board user equipment (on-board UE).

In this implementation, when the donor node of the first relay node is the second donor node, the second donor node sends, to the core network device, the second information indicating that the first relay node supports the first network slice, so that the core network device learns that an access network side (both the second donor node and the first relay node are access network side devices) actually supports the service corresponding to the first network slice.

In a first implementation, when the terminal device requests the service corresponding to the first network slice, the second donor node first determines that the first network slice is supported by the first relay node, and then sends the second information to the core network device to indicate, to the core network device, that a cell in which the terminal device is located can support the first network slice. Correspondingly, when receiving the second information, the core network device may directly determine that the access network side actually supports the service corresponding to the first network slice. It may be understood that, when the second information is in this form, it may be considered as an explicit indication manner.

In a second implementation, when the donor node of the first relay node changes from a first donor node to the second donor node, the second donor node finds that a network slice list supported by the first relay node is not completely the same as a network slice list supported by the second TA, and sends the second information to the core network device. Specifically, the second information may include at least one of the following information: a first area identifier, a second area identifier, a network slice supported by a first TA, and a network slice supported by the second TA, where the first area identifier indicates the first TA, the second area identifier indicates the second TA, the tracking area in which the terminal device is located is the first TA when the donor node of the first relay node is a first donor node, and the network slice supported by the first TA includes the first network slice.

In an example of the second implementation, when core network devices to which the first donor node and the second donor node belong are a same core network device, the second information may include only the first area identifier. It should be understood that, in this example, because the first donor node previously reports the network slice supported by the first TA to the core network device, after receiving the second information, the core network device may determine all network slices supported by the first TA as the network slices actually supported by the first relay node. Because all the network slices supported by the first TA include the first network slice, the core network device may learn that the first relay node actually supports the first network slice. Optionally, in this example, the second information sent by the first donor node may further include any one or more of the following: the second area identifier, the network slice supported by the second TA, and the network slice supported by the first TA.

In another example of the second implementation, when the core network devices to which the first donor node and the second donor node belong are not the same core network device, the core network device is a network element having a function of a core network side, for example, an access and mobility function (access and mobility function, AMF). In this case, the second information may include the first area identifier and a network slice that is supported by the first TA and that is indicated by the first area identifier. In this example, after receiving the second information, the core network device may determine all network slices supported by the first TA as the network slices actually supported by the first relay node. Because the network slices supported by the first TA include the first network slice, the core network device may learn that the first relay node actually supports the first network slice. Optionally, in this example, the second information sent by the first donor node may further include any one or more of the following: the second area identifier and the network slice supported by the second TA.

In a conventional technology, when the donor node of the first relay node accessed by the terminal device is the second donor node, in this case, if the terminal device requests the service corresponding to the first network slice, because the first network slice is not supported by the second TA, the core network device considers that the access network side does not support the first network slice. Therefore, when allowed NSSAI (also referred to as Allowed NSSAI) is returned to the terminal device, the allowed NSSAI does not include the identifier of the first network slice. However, in the technical solutions provided in this application, the second donor node sends, to the core network device, the second information indicating that the first relay node supports the first network slice, so that the core network device can learn that the access network side (both the second donor node and the first relay node are access network side devices) actually supports the service corresponding to the first network slice, and return the allowed NSSAI (that is, the first allowed NSSAI in this application, also referred to as first allowed NSSAI in this application) to the terminal device and/or the second donor node. In this case, the allowed NSSAI includes the identifier of the first network slice, to indicate, to the terminal device or the second donor node, that the service corresponding to the first network slice requested by the terminal device is allowed, thereby improving a success rate of requesting the service of the first network slice by the terminal device, and improving user experience.

With reference to the first aspect, in a possible implementation, the first area identifier is a tracking area code TAC and/or a tracking area identity TAI of the first TA, and the second area identifier is a TAC and/or a TAI of the second TA.

With reference to the first aspect, in a possible implementation, the method further includes: sending third information to the terminal device, where the third information indicates that the first network slice is supported by the first relay node.

With reference to the first aspect, in a possible implementation, the method further includes: receiving fourth information from the first donor node, where the fourth information indicates a protocol data unit PDU session having been established by the first donor node for the terminal device; receiving fifth information from the first donor node, where the fifth information indicates that the terminal device accesses the first relay node and is stationary relative to the first relay node; and sending sixth information to the second donor node, where the sixth information indicates the second donor node to accept a to-be-established PDU session indicated by a core network device, and the established PDU session includes the to-be-established PDU session.

The fifth information indicates that the terminal device accesses the first relay node and is stationary relative to the first relay node. In other words, the fifth information indicates that the terminal device is an on-board UE.

In an implementation, when a distance between the terminal device and the first relay node is less than a preset threshold, it is considered that the terminal device is stationary relative to the first relay node.

In an implementation, the fifth information is in either of the following two forms: indicating that a reason for a handover request is distributed unit DU migration or mobile termination MT migration of the first relay node, and indicating that a cell in which the terminal device is located is a cell of the first relay node when the donor node of the first relay node is the first donor node.

In this implementation, because the first donor node indicates, to the core network device by using the fifth information, that the terminal device is the on-board UE, the core network device may determine the to-be-established PDU session indicated to the second donor node. The to-be-established PDU session is a PDU session that does not require the second donor node to perform handover admission control, so that the second donor node directly allocates a resource to the to-be-established PDU session. It may be understood that, according to the technical solutions in this implementation, continuity of the PDU session of the terminal device can be ensured, thereby improving user experience.

With reference to the first aspect, in a possible implementation, the method further includes: sending second allowed NSSAI to the second donor node, where the second allowed NSSAI includes an identifier of a network slice associated with the to-be-established PDU session.

According to a second aspect, this application provides a communication method, applied to a terminal device or a chip in a terminal device, and including: sending first information to a core network device, where the first information is used for requesting a service corresponding to a first network slice, and a terminal device accesses a first relay node; and receiving first allowed network slice selection assistance information NSSAI from the core network device, where the first allowed NSSAI includes an identifier of the first network slice, where the first network slice is not supported by a second tracking area TA, and a tracking area in which the terminal device is located is the second TA when a donor node of the first relay node is a second donor node.

With reference to the second aspect, in a possible implementation, the method further includes: receiving third information from the core network device, where the third information indicates that the first network slice is supported by the first relay node.

With reference to the second aspect, in a possible implementation, when a cell accessed by the terminal device changes from a first cell of the first relay node to a second cell, the method further includes: initiating a tracking area update TAU, where the first cell of the first relay node and the second cell are located in a same registration area RA, and the second cell does not belong to the first relay node.

An implementation of initiating the tracking area update TAU includes: initiating the TAU when a system message broadcast by the second cell does not indicate that the second cell is a cell of the first relay node.

It should be understood that after the terminal device accesses the first cell of the first relay node, the following scenario may further exist: As the terminal device moves, the cell accessed by the terminal device changes from the first cell to a cell of another non-first relay node. In this case, if a service corresponding to a slice requested by the terminal device is supported by a TA to which the second cell belongs but not supported by the first relay node, the service corresponding to the slice requested by the terminal device is not to be rejected. Therefore, in this implementation, when the cell accessed by the terminal device changes from the first cell of the first relay node to the second cell, the terminal device initiates the TAU, so that the terminal device can re-initiate, in the RA, the service corresponding to the network slice that is rejected in the cell of the first relay node but that can be supported by the TA to which the second cell belongs.

According to a third aspect, this application provides a communication method, applied to a second donor node or a chip in a second donor node, and including: sending second information to a core network device, where the second information indicates that a first relay node supports a first network slice, and the first network slice is not supported by a second tracking area TA; and receiving first allowed network slice selection assistance information NSSAI from the core network device, where the first allowed NSSAI includes an identifier of the first network slice, where a service corresponding to the first network slice is a service requested by a terminal device from the core network device, the terminal device accesses the first relay node, and a tracking area in which the terminal device is located is the second TA when a donor node of the first relay node is a second donor node.

With reference to the third aspect, in a possible implementation, the second information may include at least one of the following information: a first area identifier, a second area identifier, a network slice supported by a first TA, and a network slice supported by the second TA, where the first area identifier indicates the first TA, the second area identifier indicates the second TA, the tracking area in which the terminal device is located is the first TA when the donor node of the first relay node is a first donor node, and the network slice supported by the first TA includes the first network slice.

With reference to the third aspect, in a possible implementation, the first area identifier is a tracking area code TAC and/or a tracking area identity TAI of the first TA, and the second area identifier is a TAC and/or a TAI of the second TA.

With reference to the third aspect, in a possible implementation, the method further includes: receiving sixth information from the core network device, where the sixth information indicates the second donor node to accept a to-be-established protocol data unit PDU session indicated by the core network device, and PDU sessions having been established by the first donor node for the terminal device include the to-be-established PDU session; and determining to accept the to-be-established PDU session.

With reference to the third aspect, in a possible implementation, the method further includes: receiving second allowed NSSAI from the core network device, where the second allowed NSSAI includes the identifier of the network slice associated with the established PDU session.

According to a fourth aspect, this application provides a communication method, applied to a first donor node or a chip in a first donor node, and including: sending fourth information to a core network device, where the fourth information indicates a protocol data unit PDU session having been established by the first donor node for a terminal device; and sending fifth information to the core network device, where the fifth information indicates that the terminal device accesses a first relay node and is stationary relative to the first relay node.

With reference to the fourth aspect, in a possible implementation, the fifth information is in either of the following two forms: indicating that a reason for a handover request is distributed unit DU migration or mobile termination MT migration of the first relay node, and indicating that a cell in which the terminal device is located is a cell of the first relay node when a donor node of the first relay node is the first donor node.

According to a fifth aspect, this application provides a communication method, applied to a core network device, and including: receiving fourth information sent by a first donor node, where the fourth information indicates a protocol data unit PDU session having been established by the first donor node for a terminal device; receiving fifth information from the first donor node, where the fifth information indicates that the terminal device accesses a first relay node and is stationary relative to the first relay node; and sending sixth information to a second donor node, where the sixth information indicates the second donor node to accept a to-be-established PDU session indicated by the core network device, and the established PDU session includes the to-be-established PDU session.

With reference to the fifth aspect, in a possible implementation, the method further includes: sending second allowed NSSAI to the second donor node, where the second allowed NSSAI includes an identifier of a network slice associated with the to-be-established PDU session.

With reference to the fifth aspect, in a possible implementation, the fifth information is in either of the following two forms: indicating that a reason for a handover request is distributed unit DU migration or mobile termination MT migration of the first relay node, and indicating that a cell in which the terminal device is located is a cell of the first relay node when a donor node of the first relay node is the first donor node.

According to a sixth aspect, this application provides a communication method, applied to a first donor node or a chip in a first donor node, and including: sending seventh information to a second donor node, where the seventh information is used for requesting the second donor node to accept a protocol data unit PDU session having been established by the first donor node for a terminal device, and the seventh information includes a session identifier and an identifier of a network slice that are associated with the established PDU session; and sending eighth information to the second donor node, where the eighth information indicates that the terminal device accesses a first relay node and is stationary relative to the first relay node.

The eighth information indicates that the terminal device accesses the first relay node and is stationary relative to the first relay node. In other words, the eighth information indicates that the terminal device is an on-board UE.

In an implementation, the eighth information is in either of the following two forms: indicating that a reason for a handover request is distributed unit DU migration or mobile termination MT migration of the first relay node, and indicating that a cell in which the terminal device is located is a cell of the first relay node when a donor node of the first relay node is the first donor node.

In this implementation, the first donor node indicates, to the second donor node by using the eighth information, that the terminal device is the on-board UE. Therefore, the second donor node may determine that admission control does not need to be performed for handover of the on-board UE, and directly allocate a resource to the PDU session having been established by the terminal device. It may be understood that, according to the technical solutions in this implementation, continuity of the established PDU session of the terminal device can be ensured, thereby improving user experience.

According to a seventh aspect, this application provides a communication method, applied to a second donor node or a chip in a second donor node, and including: receiving seventh information sent by a first donor node, where the seventh information is used for requesting a second donor node to accept a protocol data unit PDU session having been established by the first donor node for a terminal device, and the seventh information includes a session identifier and an identifier of a network slice that are associated with the established PDU session; receiving eighth information from the first donor node, where the eighth information indicates that the terminal device accesses a first relay node and is stationary relative to the first relay node; and determining to accept the established PDU session.

With reference to the seventh aspect, in a possible implementation, the eighth information is in either of the following two forms: indicating that a reason for a handover request is distributed unit DU migration or mobile termination MT migration of the first relay node, and indicating that a cell in which the terminal device is located is a cell of the first relay node when a donor node of the first relay node is the first donor node.

With reference to the seventh aspect, in a possible implementation, the method further includes: receiving third allowed network slice selection assistance information NSSAI from a core network device, where the third allowed NSSAI includes the identifier of the network slice associated with the established PDU session.

According to an eighth aspect, this application provides a communication method, applied to a first donor node or a chip in a first donor node, and including: determining that a protocol data unit PDU session has been established for a terminal device accessing a first relay node, where a donor node of the first relay node is the first donor node, and the first relay node is deployed in a mobile device and moves with the mobile device; and sending ninth information to the first relay node, where the ninth information indicates the first relay node to disable updating of a tracking area code TAC.

It should be noted herein that the TAC in this application may alternatively be replaced with a tracking area identity TAI.

An implementation of sending the ninth information to the first relay node includes: sending the ninth information to the first relay node when a network slice associated with the established PDU session is not supported by a second TA.

With reference to the eighth aspect, in a possible implementation, the ninth information further indicates a duration of disabling updating of the TAC in the first relay node.

According to the communication method provided in this implementation, after determining that the PDU session has been established for the terminal device, the first donor node indicates, to the first relay node, that update of the TAC is disabled, so that the first relay node does not update the TAC. In this way, the established PDU session can be not interrupted, thereby improving user experience.

In an implementation, the ninth information includes a TAC of the second TA, and the second TA is a tracking area in which the terminal device is located when the donor node of the first relay node is the second donor node.

According to a ninth aspect, this application provides a communication method, applied to a terminal device or a chip of a terminal device. The method includes: when a cell on which the terminal device camps or accessed by the terminal device changes from a second cell to a first cell of a first relay node, disabling sending of a tracking area update TAU, where the second cell does not belong to the first relay node, and may be a static cell on the ground, the first relay node is deployed in a mobile device and moves with the mobile device, and the terminal device is not stationary relative to the first relay node.

Specifically, the terminal device in this implementation is a terminal device that camps on or accesses the first cell of the first relay node due to mobility of the mobile device, but previously camps on or accesses the second cell of another non-first relay node, and is also referred to as an on-board user equipment or a surrounding user equipment (surrounding UE).

With reference to the ninth aspect, in a possible implementation, the disabling sending of the tracking area update TAU includes: when a system message broadcast by the first cell is received, disabling sending of the TAU, where the system message broadcast by the first cell includes indication information indicating that the first cell is a cell of the first relay node and a TAC of the first cell.

With reference to the ninth aspect, in a possible implementation, the disabling sending of the tracking area update TAU includes: receiving tenth information sent by a core network device, where the tenth information indicates a tracking area code TAC list to which a relay node near the terminal device belongs and/or a cell list of the relay node near the terminal device; and disabling sending of the TAU when the TAC of the first cell or a cell identifier of the first cell is included in content indicated by the tenth information.

With reference to the ninth aspect, in a possible implementation, the disabling sending of the tracking area update TAU includes: receiving a registration area RA sent by a core network device, where the RA includes a TAC list of a relay node near the terminal device and/or a cell list of the relay node near the terminal device; and disabling sending of the TAU when it is determined that the TAC of the first cell or the cell identifier of the first cell is in the RA.

According to the communication method provided in this implementation, a problem that the surrounding UE frequently initiates the TAU due to movement of the first relay node is reduced, thereby not only improving user experience, but also reducing unnecessary power consumption of the surrounding UE.

According to a tenth aspect, this application provides a communication apparatus, including a memory and a processor, where the memory is configured to store program instructions, and the processor is configured to invoke the program instructions in the memory to perform the method according to any one of the first aspect to the ninth aspect or any possible implementations of the first aspect to the ninth aspect.

According to an eleventh aspect, this application provides a computer-readable medium, where the computer-readable medium stores program code to be executed by a computer, and the program code includes instructions used for performing the method according to any one of the first aspect to the ninth aspect or any possible implementation of the first aspect to the ninth aspect.

According to a twelfth aspect, this application provides a computer program product, where the computer program product includes computer program code, and when the computer program code runs on a computer, the computer is enabled to implement the method according to any one of the first aspect to the ninth aspect or any possible implementation of the first aspect to the ninth aspect.

For technical effects brought by any one of the implementations of the tenth aspect to the twelfth aspect, refer to technical effects brought by any one of the first aspect to the third aspect and any possible implementations of the first aspect to the third aspect. Details are not described again.

### BRIEF DESCRIPTION OF DRAWINGS

FIG. 1 is a diagram of a communication system according to this application;
FIG. 2 is a diagram of an IAB architecture according to this application;
FIG. 3 is a diagram of a change of a donor of an mIAB node according to this application;
FIG. 4 is a diagram of a change of a donor of another mIAB node according to this application;
FIG. 5 is a diagram of a method for improving a success rate of a service corresponding to a network slice requested by a terminal device according to an embodiment of this application;
FIG. 6 is a diagram of a method for improving a success rate of a service corresponding to a network slice requested by a terminal device according to another embodiment of this application;
FIG. 7 is a diagram of a communication method for managing a PDU session according to an embodiment of this application;
FIG. 8 is a diagram of a communication method for managing a PDU session according to another embodiment of this application;
FIG. 9 is a schematic flowchart of an uninterrupted slice service of an on-board UE according to an embodiment of this application;
FIG. 10 is a schematic flowchart of reducing frequent TAU initiation by a surrounding UE according to an embodiment of this application;
FIG. 11 is a diagram of a structure of a communication apparatus according to an embodiment of this application; and
FIG. 12 is a diagram of a structure of a communication apparatus according to another embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, first information and second information are merely used for distinguishing between different information, and do not limit a sequence of the first information and the second information. A person skilled in the art may understand that the terms such as "first" and "second" do not limit a quantity or an execution sequence, and the terms such as "first" and "second" do not indicate a definite difference.

It should be noted that, in this application, terms such as "example" or "for example" are used for representing giving an example, an illustration, or a description. Any embodiment or design scheme described as an "example" or "for example" in this application should not be explained as being exemplary or having more advantages than another embodiment or design scheme. Exactly, use of the term like "example" or "for example" is intended to present a related concept in a specific manner.

In addition, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be single, or may be plural.

The following describes in detail embodiments of this application with reference to the accompanying drawings.

For ease of understanding, the following briefly describes terms in embodiments of this application.

### 1. Network slice (network slice, slice for short)

As hundreds of billions of internet of things devices access a network, different types of application scenarios have different network requirements, and some requirements even conflict with each other. If a single network is used to provide services for different types of application scenarios, a network architecture may be extremely complex, resulting in low network management efficiency and resource utilization.

A network slice technology provides an isolated network environment for different application scenarios by virtualizing an independent logical network on a same network infrastructure, so that network functions and characteristics can be customized for different application scenarios based on respective requirements, thereby effectively ensuring QoS requirements of different services.

The network slice aims to organically combine a terminal device, an access network resource, a core network resource, and a network operation and maintenance and management system, to provide a complete network that can be independently operated and maintained and isolated for different business scenarios or service types. Various scenarios pose different requirements such as charging, policy, security, and mobility, for the 3rd generation partnership project (3rd generation partnership project, 3GPP) ecosystem. The 3GPP emphasizes that network slices do not affect each other. For example, a large quantity of sudden meter reading services are not to affect normal mobile broadband services. To meet diversified requirements and isolation between slices, independent management and operation and maintenance of services need to be performed, and customized service functions and analysis capabilities need to be provided. Instances of different types of services are deployed on different network slices, and different instances of a same service type may also be deployed on different network slices.

When a network slice is deployed on a core network, a network slice selection process is triggered when a user initially attaches to the network. Parameters that need to be considered in the network slice selection process include user subscription data, local configuration information, a roaming agreement, a policy of an operator, and the like. A proper slice type may be selected for the terminal device by comprehensively considering the parameters.

In embodiments of this application, the network slice may be referred to as a slice for short.

### 2. Identifier of a network slice

Single network slice selection assistance information (single network slice selection assistance information, S-NSSAI) identifies a single network slice. The S-NSSAI includes a slice/service type (slice/service type, SST) and a slice differentiator (slice differentiator, SD). The SST is used for describing a characteristic and a service feature of the network slice. The SD is used for distinguishing between different network slices with a same SST feature.

Network slice selection assistance information (network slice selection assistance information, NSSAI) is a set of pieces of S-NSSAI and identifies one or more network slices.

### 3. Configured NSSAI (Configured NSSAI)

A network configures the NSSAI for a terminal device. After receiving this configuration parameter, the terminal device knows which S-NSSAI or pieces of S-NSSAI is or are available on the network. The network side indicates the S-NSSAI or the pieces of S-NSSAI to the terminal device by using a "configured NSSAI" information element (information element, IE) in a registration accept (registration accept) message. If a configuration of the terminal device changes after registration, the network side may notify the terminal device of update by using a configuration update command (Configuration update command). The terminal device stores the configured NSSAI configured by each network in a non-volatile storage space, and each public land mobile network (public land mobile network, PLMN) can configure one piece of configured NSSAI at most.

### 4. Requested NSSAI (Requested NSSAI)

The requested NSSAI is allowed NSSAI (Allowed NSSAI) or configured NSSAI included by a terminal device in a registration request (Registration Request) message.

### 5. Allowed NSSAI (Allowed NSSAI)

The allowed NSSAI indicates which S-NSSAI or pieces of S-NSSAI in NSSAI requested by a terminal device is or are allowed by a network side (including an access network side and a core network side). Specifically, the network side indicates the S-NSSAI or the pieces of S-NSSAI to the terminal device by using an "allowed NSSAI" IE in a registration accept (registration accept) message.

### 6. TA update

When a terminal device registers with a network, a core network assigns a registration area (registration area, RA) to each terminal device. The RA includes a tracking area identity (tracking area identity, TAI) list, where the TAI includes a PLMN and a tracking area code (tracking area code, TAC).

When the terminal device is in an idle state (also referred to as an IDLE state), to find the terminal device, the network side needs the core network to deliver a paging message (5GC paging) to all cells in all TAs in the TAI list, which is also referred to as core network-level terminal device tracking.

When the terminal device moves to a cell that does not belong to the TAI list, that is, when a cell in which the terminal device is located is not in an area included in the RA, the terminal device actively initiates a tracking area update (tracking area update, TAU). Then, after receiving the TAU, a core network device registers a position of the terminal device and updates the RA of the terminal device, to reassign, to the terminal device, a TAI list that includes a TA to which the cell in which the terminal device is currently located belongs.

### 7. A core network device obtains a slice supported by an access network side

The slice list supported by an access network device is preconfigured by operations, administration and maintenance (operations, administration and maintenance, OAM) based on a TA granularity, and then may be reported to the core network device when an NG interface is established between the access network device and the core network device. In other words, support of the access network side for the slice complies with TA homogeneous deployment, and all cells in a specific TA support a same slice. If the access network device may further support central unit (central unit, CU)/distributed unit (distributed unit, DU) separation, further, the DU needs to first send a slice list supported by each TA to the CU, and then the CU reports the slice list to the core network device.

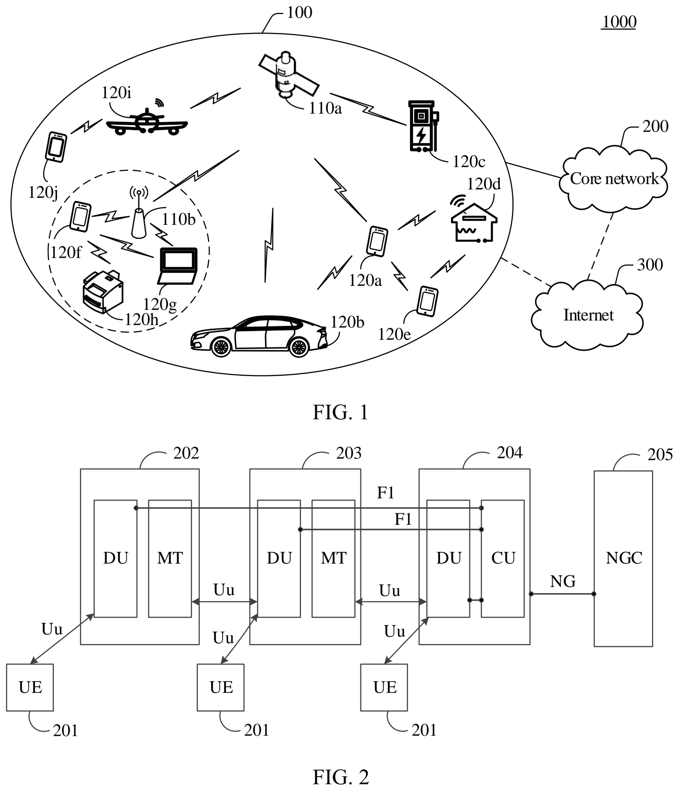

FIG. 1 is a diagram of an architecture of a communication system 1000 to which embodiments of this application are applied. As shown in FIG. 1, the communication system includes a radio access network 100 and a core network 200. Optionally, the communication system 1000 may further include an Internet 300. The radio access network (radio access network, RAN) 100 may include at least one RAN node (for example, 110a and 110b in FIG. 1, which are collectively referred to as 110), and may further include at least one terminal (for example, 120a to 120j in FIG. 1). The terminal is connected to the radio access network device in a wireless manner, and the radio access network device is connected to the core network in a wireless or wired manner. The core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for a connection between terminals and between radio access network devices. FIG. 1 is only a diagram. The communication system may further include other network devices, for example, may further include a wireless relay device and a wireless backhaul device. This is not shown in FIG. 1.

The RAN 100 may be a 3GPP-related cellular system, for example, a 4G or 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be referred to as an access network device, a RAN entity, an access node, or the like sometimes, and forms a part of the communication system, to help the terminal implement radio access. The plurality of RAN nodes 110 in the communication system 1000 may be a same category of nodes, or may be different categories of nodes. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Sometimes, the RAN node 110 and the terminal 120 are both referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, the 110a in FIG. 1), a micro base station or an indoor station (for example, the 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). All or some functions of the RAN node in this application may alternatively be implemented by using a software function running on hardware, or may be implemented by using an instantiated virtualization function on a platform (for example, a cloud platform). Alternatively, the RAN node in this application may be a logical node, a logical module, or software that can implement all or some functions of the RAN node.

In another possible scenario, a plurality of RAN nodes coordinate to assist the terminal in implementing radio access, and different RAN nodes respectively implement parts of functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be set separately, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal is a device having a wireless transceiver function, and may send a signal to a base station, or receive a signal from a base station. The terminal may alternatively be referred to as a terminal device, a user equipment (user equipment, UE), a mobile station, a mobile termination, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

Generally, in the communication system shown in FIG. 1, the terminal device may include, in a registration request message, a slice identifier of a network slice (slice) service that needs to be requested, to request a specific slice service from a core network device. However, when the current terminal device requests the network slice service from the core network device, there may be a problem that a success rate of requesting the network slice service by the terminal device is low.

For example, when the communication system in FIG. 1 uses an IAB architecture, if an IAB node accessed by the terminal device is deployed on a mobile device (for example, a vehicle) and moves with the mobile device, and when a donor node of the accessed IAB node changes, there may be a problem that the success rate of requesting the slice service by the terminal device remaining stationary relative to the accessed IAB node decreases.

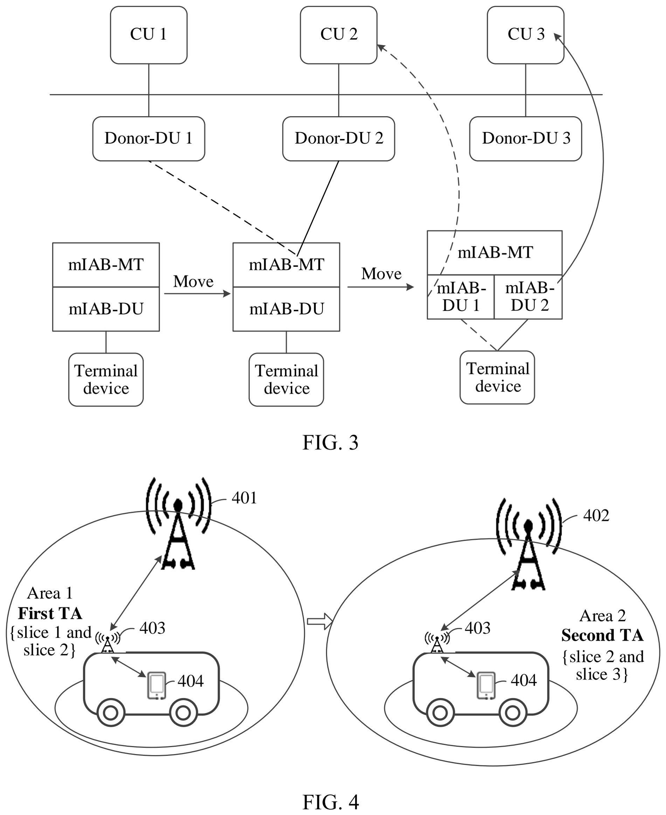

For ease of understanding, with reference to FIG. 2 and FIG. 4, the following describes in detail a problem of a low success rate of requesting a slice service by a terminal device in an IAB architecture.

First, with reference to FIG. 2, a diagram of an IAB architecture is described. As shown in FIG. 2, the IAB architecture includes a terminal device 201 (that is, a UE 201 in the figure), an IAB node 202, an IAB node 203, an IAB donor 204, and a core network 205. The IAB donor 204 is directly connected to the core network 205, the IAB donor 204 is connected to the IAB node 203, the IAB node 203 is connected to the IAB node 202, and the IAB node 202 is connected to the terminal device 201. A physical interface between the terminal device 201 and the IAB node 202 is a Uu interface, and a physical interface between the IAB donor 204 and the core network 205 is an NG interface.

As shown in FIG. 2, the terminal device 201 may access the IAB node 202 through the Uu interface. Service data of the terminal device 201 may be sent, via the IAB node 203 connected to the IAB node 202, to the IAB donor 204 connected to the IAB node 203, and further, sent to the core network through the NG interface between the IAB donor 204 and the core network 205.

It should be understood that names of a physical interface between the IAB node 202 and the IAB node 203 and a physical interface between the IAB node 203 and the IAB donor 204 are not specifically limited in embodiments of this application.

It should be understood that, in this embodiment of this application, the IAB donor 204 may be connected to a plurality of IAB nodes, and each IAB node may be further connected to another IAB node or terminal device. For example, FIG. 2 shows only one IAB node 203 connected to the IAB donor 204, and shows only one IAB node 202 connected to the IAB node 203 and one terminal device 201 connected to the IAB node 202. However, embodiments of this application are not limited.

In this embodiment of this application, the IAB donor and the IAB node may be devices configured to communicate with a mobile station, and may be specifically any one of the following: an access point (access point, AP) in a wireless local area network (wireless local Area network, WLAN), a base transceiver station (base transceiver station, BTS) in a global system for mobile communications (global system for mobile communications, GSM) or code division multiple access (code division multiple access, CDMA), a NodeB (NodeB, NB) in wideband code division multiple access (wideband code division multiple access, WCDMA), an evolved NodeB (evolved NodeB, eNB) in an LTE system, a relay station or an access point, a vehicle-mounted device, a wearable device, an access network device in a future 5G network, an access network device in a future evolved public land mobile network (public land mobile network, PLMN), and the like.

For a concept of the terminal device, refer to descriptions about the terminal in FIG. 1. Details are not described herein again.

Specifically, in the IAB architecture, each IAB node is configured to provide access and backhaul services for a child node or the terminal device.

Specifically, each IAB node needs to maintain a wireless link oriented to a parent node, and further needs to maintain a wireless link with the child node. If the child node of the IAB node is the terminal device, the wireless link between the IAB node and the child node (that is, the terminal device) is referred to as a wireless access link. If the child node of the IAB node is another IAB node, the wireless link between the IAB node and the child node (that is, the another IAB node) is referred to as a wireless backhaul link.

Using FIG. 2 as an example, the terminal device 201 accesses the IAB node 202 over a wireless access link, the IAB node 202 is connected to the IAB node 203 over a wireless backhaul link, and the IAB node 203 is connected to the IAB donor by using a wireless backhaul link.

It should be noted herein that, in this embodiment of this application, the IAB node accessed by the terminal device is also referred to as an access IAB node, and an IAB node that is other than the access IAB node and that is configured to provide a backhaul service is also referred to as an intermediate IAB node.

Using FIG. 2 as an example, the IAB node 202 is an access IAB node, and the IAB node 203 is an intermediate IAB node. However, it should be understood that an IAB node is an access IAB node for a terminal that accesses the IAB node and is an intermediate IAB node for a terminal that accesses another IAB node. Therefore, whether an IAB node is specifically an access IAB node or an intermediate IAB node is not fixed and needs to be determined based on a specific application scenario.

More specifically, as shown in FIG. 2, each IAB node includes a mobile termination (mobile termination, MT) part and a distributed unit (distributed unit, DU) part. When oriented to a parent node of the IAB node, the IAB node may serve as a terminal device, that is, a role of an MT. When oriented to a child node of the IAB node (the child node may be the another IAB node or the terminal device), the IAB node is considered as a network device, that is, a role of a DU.

Using FIG. 2 as an example, when oriented to a parent node (that is, the IAB node 203) of the IAB node 202, the IAB node 202 is considered as a terminal device, that is, the role of an MT. When oriented to a child node (that is, the terminal device 201) of the IAB node 202, the IAB node 202 is considered as a network device, that is, the role of a DU. Similarly, when oriented to a parent node (that is, the IAB donor 204) of the IAB node 203, the IAB node 203 is considered as a terminal device, that is, the role of an MT. When oriented to a child node (that is, the IAB node 202) of the IAB node 203, the IAB node 203 is considered as a network device, that is, the role of a DU.

Alternatively, in other words, for the DU in the IAB donor 204, the MT in the IAB node 203 is considered as a terminal device, and for the MT in the IAB node 203, the DU in the IAB donor 204 is considered as a network device. Similarly, for the DU in the IAB node 203, the MT in the IAB node 202 is considered as a terminal device, and for the MT in the IAB node 202, the DU in the IAB node 203 is considered as a network device. Similarly, for the terminal device 201, the DU in the IAB node 202 is considered as a network device.

Specifically, in this application, the IAB donor 204 may be an access network network element having a complete base station function, or may be an access network network element in a form of a central unit (central unit, CU) and a distributed unit (distributed unit, DU). In this application, the central unit in the IAB donor is also referred to as a Donor-CU (or directly referred to as a CU) for short, and the distributed unit in the IAB donor is referred to as a Donor-DU for short. The Donor-CU may alternatively be in a form in which a control plane (control plane, CP) is split from a user plane (user plane, UP). For example, the CU may include one CU-CP and one or more CU-UPs.

As shown in FIG. 2, the DU part of each IAB node is connected to the IAB donor through an F1 interface. In addition, the MT in each IAB node may be connected to the Donor-CU through an air interface.

Specifically, the F1 interface includes two parts: a control plane and a user plane. The user plane part is maintained between a DU part of the IAB node and the Donor-CU-UP, and the control plane part is maintained between the DU of the IAB node and the Donor-CU-CP.

Specifically, in this application, the core network 205 is mainly configured to perform authentication, mobility management, PDU session management, and the like on the terminal device. It should be noted herein that a specific form of the core network 205 is not limited in this application. For example, the core network 205 may be a core network in a 5 generation (5 generation, 5G) mobile communication system, a core network in a 4G mobile communication system, a core network in a 6G mobile communication system, a core network in a future communication system, or the like.

More specifically, the core network 205 mainly includes a user plane function (user equipment function, UPF) and a control plane function of a data plane. The user plane function is mainly responsible for data packet forwarding, quality of service (quality of service, QoS) control, charging information collection, connection to an external network, and the like, and includes related functions of a serving gateway (serving gateway, SGW) and a public data network gateway (public data network gateway, PDN-GW) in a long term evolution (long term evolution, LTE) technology. The control plane function is mainly responsible for service procedure interaction, and delivering a data packet forwarding policy, a QoS control policy, and the like to a user plane. For example, network elements in the control plane function mainly include a mobility management function (access and mobility function, AMF), a session management function (session management function, SMF), a policy control function (policy control function, PCF), an application function (application function, AF), a network exposure function (network exposure function, NEF), and the like.

It should be understood that, for the IAB architecture shown in FIG. 2, the access IAB node (that is, the IAB node 202 in FIG. 2) in the IAB architecture may be deployed on a mobile device (for example, a vehicle) and move with the mobile device. However, in a movement process, the donor node of the access IAB node may change. In this application, for ease of description, the access IAB node moving with the mobile device is also referred to as a mobile IAB (mobile IAB, mIAB) node.

For example, with reference to FIG. 3, a process in which a donor node of the mIAB node may change is described.

In a first possible scenario, the donor node of the mIAB node changes due to partial migration (also referred to as partial migration). As shown in FIG. 3, when the mIAB node is installed in a mobile device and moves with the mobile device, an MT (mIAB-MT in FIG. 3) in the mIAB node may migrate from a cell controlled by a Donor-DU1 to a cell controlled by a Donor-DU2, where the Donor-DU1 belongs to a topology controlled by a CU1, and the Donor-DU2 belongs to a topology controlled by a CU2. It should be noted that, in partial migration, only mIAB-MT migration is completed, that is, a radio resource control (radio resource control, RRC) connection of the mIAB-MT is switched from the CU1 to the CU2, but an F1 connection of an mIAB-DU2 is still terminated at the CU1 and is not migrated to the CU2 together with the mIAB node. In this case, the CU1 is referred to as an F1-terminating Donor-CU, and the CU2 is referred to as a Non-F1-terminating Donor-CU.

In a second possible scenario, the donor node of the mIAB node changes due to DU migration (also referred to as DU migration). As shown in FIG. 3, when the mIAB node is installed in a mobile device and moves with the mobile device, the donor node of the DU in the mIAB node (mIAB-DU in FIG. 3) may change from the CU1 (a source donor) to a CU3 (a new donor). Generally, the source donor is also referred to as a source F1-terminating Donor-CU (source F1-terminating Donor-CU), and the new donor is also referred to as a target F1-terminating Donor-CU (target F1-terminating Donor-CU).

It should be noted herein that FIG. 3 is merely an example illustrating a possible change of the donor node of the mIAB node. This figure does not indicate that the first relay node needs to perform partial migration first and then perform DU migration. Provided that the first relay node performs either of partial migration and DU migration, it is determined that the donor node of the mIAB node can be changed.

Specifically, during DU migration, as shown in FIG. 3, it may be considered that the mIAB node includes two logical DUs, that is, the mIAB-DU includes the mIAB-DU1 and the mIAB-DU2, which may be considered as two different DUs, each having an F1 interface. The mIAB-DU1 has established a connection to the CU1 through the F1 interface, and the mIAB-DU2 is used as a to-be-activated logical DU. In a movement process, the mIAB-DU2 may be triggered by the CU1 or the OAM to establish a new F1 connection to the CU3. It should be understood that, after the mIAB node completes DU migration, a cell on which the terminal device camps or accessed by the terminal device needs to be changed from a cell managed by the mIAB-DU1 to a cell managed by the mIAB-DU2.

It should be noted that, when DU migration is performed, a specific form of the mIAB-MT when the mIAB-MT moves under the mIAB node is not limited in the embodiments. For example, when a donor of the DU in the mIAB node changes from the CU1 to the CU3, the donor controlling the mIAB-MT is the CU2 Optionally, when the donor controlling the mIAB-MT is the CU2, the CU2 and the CU1 may also be a same CU, or the CU2 and the CU3 may also be a same CU.

With reference to FIG. 2 and FIG. 3, the foregoing describes the IAB architecture and a concept that the donor of the IAB node changes. With reference to FIG. 4, the following analyzes a problem that a success rate of requesting a network slice service by a terminal device is low when an IAB donor of an mIAB node changes.

For example, as shown in FIG. 4, an mIAB node 403 is deployed on a vehicle and moves with the vehicle, and a terminal device 404 located in the vehicle may access the mIAB node 403. When the vehicle is in an area 1, an IAB donor of a DU in the mIAB node 403 is an IAB donor 401. When the vehicle moves to an area 2, the IAB donor of the DU in the mIAB node 403 changes to an IAB donor 402, that is, the IAB donor of the DU in the mIAB node 403 is migrated.

It should be understood that, the terminal device 404 accessing the mIAB node may include, in a registration request message, a slice identifier of a network slice (slice) service that needs to be requested, to request a specific slice service from a core network device. When determining that a current network side (including an access network side and a core network side) supports a service corresponding to the slice, the core network device returns allowed NSSAI to the terminal device 404, and the allowed NSSAI includes an identifier of the slice.

For the example shown in FIG. 4, it is assumed that during network planning and deployment, the area 1 corresponds to a first TA, the area 2 corresponds to a second TA, a network slice list (also referred to as a slice list in this application) supported by the first TA includes a slice 1 and a slice 2, and a slice list supported by the second TA includes the slice 2 and a slice 3.

In this case, when the IAB donor of the DU in the mIAB node 403 is migrated from the IAB donor 401 to the IAB donor 402, and a TA in the mIAB node 403 is updated from the first TA to the second TA, but the slice list supported by the mIAB node 403 is still the slice list supported by the first TA (that is, the TA in the mIAB node 403 is updated but the supported slice list is not updated), if the terminal device 404 requests, from the core network device, a service corresponding to the slice 1, because the slice list supported by the second TA does not include the slice 1, the core network device considers that the access network side does not support the service corresponding to the slice 1 (but the mIAB node 403 actually supports the service). Consequently, the terminal device 404 fails to request the service corresponding to the slice 1, resulting in poor user experience.

In view of this, this application provides a communication method and a communication apparatus, to improve user experience.

In addition, before the solutions provided in this application are described, it should be emphasized that the IAB architecture shown in FIG. 2 is merely a specific example of a relay networking architecture. During specific implementation of the communication method provided in this application, the IAB architecture may also be extended to another type of relay networking architecture. In this case, the IAB node in FIG. 2 is also referred to as a relay node, and the IAB donor or an IAB donor base station is also referred to as a donor node or a donor base station. This is not specifically limited in embodiments of this application.

The following describes the communication method provided in this application.

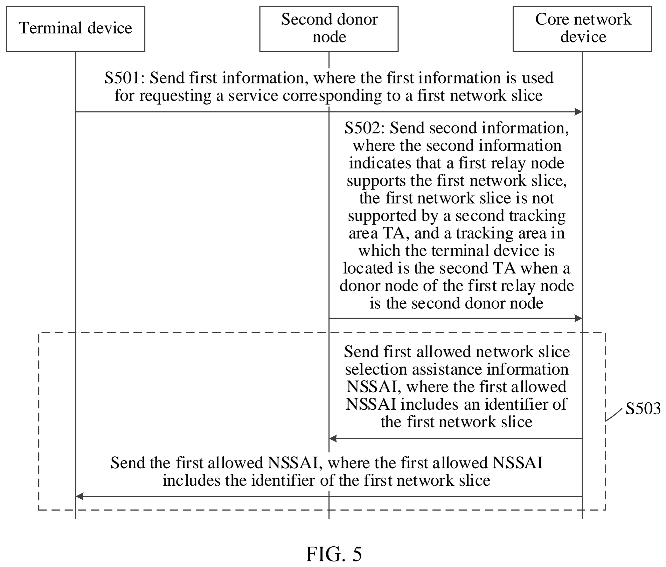

FIG. 5 is a schematic flowchart of a communication method according to an embodiment of this application. Specifically, FIG. 5 is a schematic flowchart of a communication method for improving a success rate of requesting a slice service by a terminal device.

As shown in FIG. 5, the method may include S501, S502, and S503.

S501: A terminal device sends first information to a core network device. Correspondingly, the core network device receives the first information sent by the terminal device, and the first information is used for requesting a service corresponding to a first network slice.

For example, in this embodiment, a first relay node is in a form of an IAB node, and the core network device is in a form of an AMF.

In this embodiment, the first relay node may be deployed in a mobile device (for example, a vehicle) and move with the mobile device.

In this embodiment, the terminal device accesses the first relay node, and a current donor node of the first relay node is a second donor node.

That the current donor node of the first relay node is the second donor node may also be expressed as follows: The first relay node is currently connected to a CU in the second donor node.

In an example, the first relay node currently establishes an F1 connection to the second donor node through an F1 interface. Alternatively, in other words, in this example, the second donor node is a donor node that currently establishes an F1 connection to the first relay node.

In this embodiment, the terminal device is a terminal device that accesses the first relay node and is stationary relative to the first relay node, and is also referred to as an on-board UE.

In this embodiment, when the terminal device accesses the first relay node and the donor node of the first relay node is the second donor node, the terminal device may request, from the core network device, a service corresponding to a network slice. For example, the terminal device requests, by using a registration request (Registration Request), to register a first network slice (also referred to as a slice 1 in this embodiment), or requests, by using a service request (Service Request), service data corresponding to the first network slice, or requests, by using a protocol data unit (protocol data unit, PDU) session establishment request (for example, referred to as a PDU Session Establishment Request), to establish a PDU session associated with the first network slice. This is not limited in this embodiment.

For a concept of a network slice, refer to descriptions in a related technology. Details are not described herein again.

S502: The second donor node sends second information to the core network device, and correspondingly, the core network device receives the second information sent by the second donor node, where the first network slice is not supported by a second tracking area TA, and when the donor node of the first relay node is the second donor node, a tracking area in which the terminal device is located is the second TA.

In this embodiment, when the donor node of the first relay node is the second donor node, a TA in which the terminal device is located is referred to as a second TA.

In this embodiment, the second TA does not support the first network slice, or may be expressed as: The first network slice does not belong to the second TA.

In this embodiment, the first relay node accessed by the terminal device supports the first network slice. In other words, in this embodiment, a slice list actually supported by the first relay node is not completely the same as a slice list supported by the second TA. For example, the slice list actually supported by the first relay node includes a slice 1 and a slice 2, and the slice list supported by the second TA includes a slice 3 and a slice 4.

It should be understood that, in a conventional technology, when the donor node of the first relay node accessed by the terminal device is the second donor node, the terminal device is located in the second TA. In this case, if the terminal device requests a service of the first network slice, because the first network slice is not supported by the second TA, the core network device considers that the access network side does not support the service corresponding to the first network slice, and returns rejected NSSAI (also referred to as Rejected NSSAI) including an identifier of the first network slice to the terminal device.

However, it should be understood that, in this application, the first relay node accessed by the terminal device actually supports the first network slice. Therefore, if whether the access network side supports the service corresponding to the first network slice is determined based on the slice list supported by the second TA, accuracy of the returned allowed NSSAI is low.

In view of this, in this embodiment, the second donor node further sends the second information to the core network device. The second information indicates, to the core network device, that the first relay node currently accessed by the terminal device supports the first network slice. In other words, the second donor node notifies the core network device that the first relay node actually supports the first network slice.

It should be noted herein that a manner of triggering the second donor node to send the second information to the core network device is not limited in this embodiment.

In a first implementation, when the terminal device requests the service corresponding to the first network slice, the second donor node first determines that the first network slice is supported by the first relay node, and then sends the second information to the core network device.

Specifically, during specific implementation of the first implementation, the second information sent to the core network device may directly include the identifier of the first network slice requested by the terminal device, or the second information includes a flag bit indicating that requested NSSAI is supported. This is not limited in this embodiment. It may be understood that, in this manner, the second information may be considered as a direct indication manner.

In a second implementation, when the donor node of the first relay node is the second donor node, the second donor node determines whether the slice list supported by the first relay node is the same as the slice list supported by the second TA, and sends the second information to the core network device if the slice list supported by the first relay node is not completely the same as the slice list supported by the second TA.

For example, when the first relay node moves with the mobile device, and the donor node of the first relay node changes from the first donor node to the second donor node, if the second donor node determines that the slice list supported by the first relay node is not completely the same as the slice list supported by the second TA, the second donor node sends the second information to the core network device, to indicate, to the core network device, the slice list actually supported by the first relay node. In this embodiment, the slice list actually supported by the first relay node includes the first network slice.

Specifically, during specific implementation of the second implementation, the second information sent by the second donor node includes at least one of the following information: a first area identifier, a second area identifier, a network slice supported by the first TA, and a network slice supported by the second TA. The first area identifier indicates the first TA, the second area identifier indicates the second TA, the first TA is a tracking area in which the terminal device is located when the donor node of the first relay node is the first donor node, and the network slice supported by the first TA includes the first network slice. It should be understood that, in this implementation solution, the network slice supported by the first TA may be considered as a slice actually supported by the first relay node. In other words, in this implementation, the second information may be considered as an implicit indication manner.

In this embodiment, the network slice supported by the first TA may be understood as a network slice included in the slice list supported by the first TA, and the network slice supported by the second TA may be understood as a slice list supported by the second TA. Therefore, the network slice supported by the first TA in this application may also be replaced with the slice list supported by the first TA, and the network slice supported by the second TA in this application may also be replaced with the slice list supported by the second TA.

In an example, when the first donor node and the second donor node belong to a same core network device, the second information may include only the first area identifier. It should be understood that, in this example, because the first donor node previously reports the slice list supported by the first TA to the core network device, after receiving the second information, the core network device may determine all network slices included in the slice list supported by the first TA as the network slices actually supported by the first relay node. Because the slice list supported by the first TA includes the first network slice, the core network device may learn that the first relay node actually supports the first network slice. Optionally, in this example, the second information sent by the second donor node may further include any one or more of the following: the second area identifier, the network slice supported by the second TA (or replaced with the slice list supported by the second TA), and the network slice supported by the first TA (or replaced with the slice list supported by the first TA).

For example, the first area identifier is a tracking area code (tracking area code, TAC) and/or a tracking area identity (tracking area Identity, TAI) of the first TA, and the second area identifier is a TAC and/or a TAI of the second TA.

In an implementation, when the first donor node and the second donor node do not belong to a same core network device, the second information may include the first area identifier and the network slice that is supported by the first TA (or replaced with the slice list supported by the first TA) and that is indicated by the first area identifier. It should be understood that, in this example, after receiving the second information, the core network device may determine all network slices included in the slice list supported by the first TA as the network slices actually supported by the first relay node. Because the slice list supported by the first TA includes the first network slice, the core network device may learn that the first relay node actually supports the first network slice. Optionally, in this example, the second information sent by the first donor node may further include any one or more of the following: the second area identifier and the network slice supported by the second TA (or replaced with the slice list supported by the second TA).

S503: The core network device sends first allowed network slice selection assistance information NSSAI to the terminal device and/or the second donor node, where the first allowed NSSAI includes the identifier of the first network slice.

In this embodiment, because the second donor node indicates, to the core network device by using the second information, that the first network slice is supported by the first relay node, the core network device can determine that the access network side supports the service corresponding to the first network slice, and then when the first allowed NSSAI (Allowed NSSAI) is returned to the terminal device and/or the second donor node, the first allowed NSSAI includes the identifier of the first network slice, to indicate, to the terminal device or the second donor node, that the network side allows the service that corresponds to the first network slice and that is requested by the terminal device.

In other words, in the communication method provided in this embodiment, because the second donor node indicates, to the core network device by using the second information, that the first relay node supports the first network slice, the core network device no longer determines, based on the network slice supported by the second TA, whether the returned first allowed NSSAI includes the identifier of the first network slice, but determines, based on the network slice actually supported by the first relay node, whether the returned first allowed NSSAI includes the identifier of the first network slice. In this way, a success rate of requesting the service corresponding to the first network slice by the terminal device is improved, and user experience is improved.

It should be understood that when the terminal device requests a service corresponding to a network slice, for example, requests a service corresponding to a second network slice, the second network slice may not be supported by the first relay node. In view of this, in an optional embodiment, the communication method provided in this application further includes: skipping sending the second information to the core network device when the first relay node determines that the second network slice is not supported by the first relay node. It may be understood that, in this manner, the core network device determines, based on the network slice supported by the second TA, whether the first allowed NSSAI sent to the terminal device and/or the second donor node includes an identifier of the second network slice.

With reference to the embodiment shown in FIG. 5, the foregoing describes how to improve the success rate of requesting the service corresponding to the first network slice by the on-board UE.

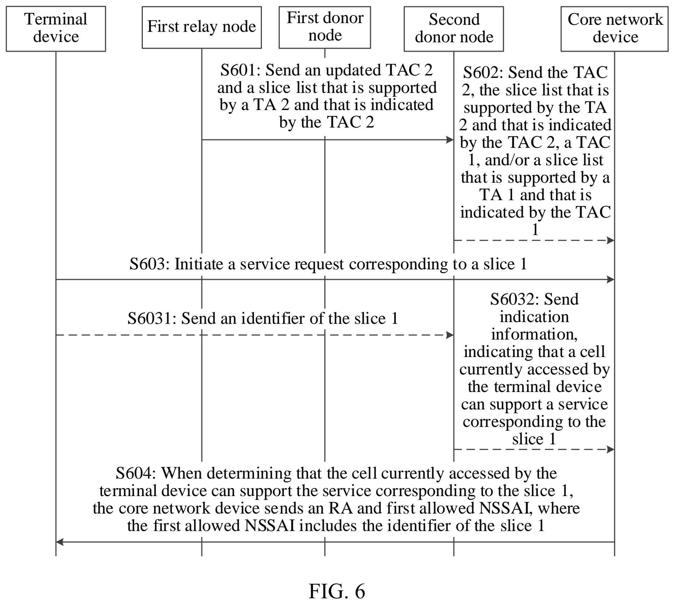

For ease of understanding, a more specific embodiment is described below with reference to FIG. 6, to describe a specific implementation of the success rate of requesting the service corresponding to the first network slice (also referred to as a slice 1) by the on-board UE.

In this embodiment, an example in which a donor node of a first relay node changes from a first donor node to a second donor node due to DU migration, the first donor node and the second donor node belong to a same core network device, when the donor node of the first relay node is the first donor node, network slices supported by the first relay node are a slice 1 and a slice 2, and when the donor node of the first relay node is the second donor node, network slices supported by a second TA are the slice 2 and a slice 3 is used for description.

As shown in FIG. 6, the method includes S601, S602, S603, and S604.

S601: The first relay node sends, to the second donor node, an updated TAC 2 and a slice list that is supported by a TA 2 and that is indicated by the TAC 2.

During specific implementation of this embodiment, after the donor node of the first relay node changes from the first donor node to the second donor node, and the first relay node updates a TAC from the TAC 1 to the TAC 2 corresponding to a current area planned and deployed in the network, the first relay node sends, to the second donor node, the updated TAC 2 and the slice list that is supported by the TA 2 and that is indicated by the TAC 2.

The TAC 1 is an identifier of the TA 1 (that is, the first TA in the embodiment shown in FIG. 5) in which the on-board UE is located when the donor node of the first relay node is the first donor node, and the TAC 2 is an identifier of the TA 2 (that is, the second TA in the embodiment shown in FIG. 5) in which the on-board UE is located when the donor node of the first relay node is the second donor node.

During specific implementation, the TAC 2 of the current area may be obtained by the first relay node from the first donor node, the second donor node, or OAM.

For example, in a first implementation, the first donor node obtains, from the second donor node, the TAC 2 of the current area, and then notifies a DU in the first relay node.

For example, in a second implementation, an MT in the first relay node receives a broadcast of the second donor node, and the broadcast carries a TAC of a serving cell accessed by the first relay node, where the TAC carried in the broadcast is the TAC 2 of the current area. Therefore, a DU in the first relay node may also know the TAC 2.

For example, in a third implementation, a DU in the first relay node obtains a TAC of the current area, that is, the TAC 2 based on an OAM configuration.

It should be understood that in this step, the first relay node updates only the TAC from the TAC 1 to the TAC 2, but the slice list actually supported by the first relay node is not updated.

In this embodiment, the first relay node may obtain the slice list supported by the TA 2 from the first donor node/the second donor node/the OAM, and then send the TAC 2 and the slice list supported by the TA 2 to the second donor node after obtaining the slice list supported by the TA 2.

It should be noted that in this embodiment, although the first relay node sends, to the second donor node, the updated TAC 2 and the slice list supported by the TA 2, the first relay node does not update the slice list actually supported by the first relay node.

In other words, in this embodiment, after the donor node of the first relay node changes from the first donor node to the second donor node, the TAC of the first relay node is updated to the TAC of the TA 2, but the slice 1 and the slice 2 included in the supported slice list are not updated to the slice 2 and the slice 3.

Optionally, the first relay node may further send, to the second donor node, a slice list supported by the TAC 1 and/or the TA 1.

It should be noted herein that a specific manner of sending, by the first relay node, the updated TAC 2 and the slice list supported by the TA 2 to the second donor node is not limited in this embodiment.

For example, in an implementation, the first relay node sends, by using an F1 establishment request of an F1 interface or gNB-DU configuration update signaling, the updated TAC 2 and the slice list supported by the TA 2 to the second donor node.

S602: The second donor node sends, to a core network device, the TAC 2, the slice list that is supported by the TA 2 and that is indicated by the TAC 2, the TAC 1, and/or the slice list that is supported by the TA 1 and that is indicated by the TAC 1.

It should be noted that this step is an optional step.

During specific implementation, the second donor node may send the TAC 2, the slice list supported by the TA2, the TAC 1, and/or the slice list supported by the TA 1 to the core network device by using NG-RAN configuration update signaling of an NG interface.

Optionally, the slice list indicated by the TAC 1 and/or the TA 1 may alternatively be obtained from the first donor node.

For example, when the second donor node sends the TAC 2, the slice list supported by the TA 2, the TAC 1, and/or the slice list supported by the TA 1, an information element structure is as follows:

| |
|---|
| TA 2 and slice list supported by the TAC 2 (for example, TAC 2: {slice 2, slice 3}) |
| >TA 1 and/or slice list supported by the TAC 1 (for example, TAC 1: {slice 1, slice 2}) |

> indicates a lower-level structure.

S603: A terminal device initiates a service request corresponding to the slice 1 to the core network device.

An identifier of the slice 1 is sent to the core network device by using a non-access stratum (non-access stratum, NAS) message.

S604: When determining that a cell currently accessed by the terminal device can support a service corresponding to the slice 1, the core network device sends an RA and first allowed NSSAI to the terminal device, where the first allowed NSSAI includes an identifier of the slice 1.

Specifically, there are two implementation solutions in which the core network device determines that the cell currently accessed by the terminal device can support the service corresponding to the slice 1.

In a first implementation solution, when the second donor node reports position information of the terminal device to the core network device, the position information may include both the updated TAC 2 and the TAC 1 before being updated. In this way, the core network device may determine that the terminal device is located in the cell of the first relay node, the first relay node is located in the TA 2, and the first relay node actually supports the slice list supported by the TA 1. Then, the core network device may determine, with reference to a slice list that is supported by a TA and indicated by each TAC and that is received by the NG interface, that the cell currently accessed by the terminal device can support the service corresponding to the slice 1.

In this application, the cell of the first relay node is also referred to as a cell controlled by the first relay node.

More specifically, in the first implementation solution, that the core network device may determine, with reference to the slice list that is supported by the TA and indicated by each TAC and that is received by the NG interface, that the cell currently accessed by the terminal device can support the service corresponding to the slice 1 includes: The core network obtains, from the received slice list that is supported by the TA and indicated by the TAC, the slice list that is supported by the TA 1 and that is indicated by the TAC 1, and then determines the slice list that is supported by the TA 1 and that is indicated by the TAC 1 as the slice list supported by the first relay node. Because the slice list supported by the TA 1 includes the identifier of the slice 1, the core network device may determine that the cell currently accessed by the terminal device can support the service corresponding to the slice 1.

Optionally, the second donor node may further indicate, to the core network device, that the cell currently accessed by the terminal device is the cell of the first relay node.

In a second implementation solution, when the terminal device initiates the service request corresponding to the slice 1 to the core network device, as shown in S6031 in FIG. 6, the identifier of the slice 1 may alternatively be provided to the second donor node by using RRC. Then, after the second donor node receives the identifier of the slice 1, the second donor node performs S6032: Send indication information to the core network device, to indicate that the cell currently accessed by the terminal device can support the service corresponding to the slice 1. Correspondingly, after receiving the indication information, the core network device may learn that the cell currently accessed by the terminal device can support the service corresponding to the slice 1.

In this embodiment, the core network device may further determine that the cell currently accessed by the terminal device is the cell of the first relay node. Specifically, an implementation in which the core network device determines that the cell currently accessed by the terminal device is the cell of the first relay node may include at least one of the following:
i. The position information of the terminal device reported by the second donor node includes both the updated TAC 2 and the TAC 1 before being updated, so that the core network device can determine that the cell accessed by the terminal device is the cell of the first relay node.
ii. The core network device determines, based on the indication information that is sent by the second donor node and that indicates that the cell currently accessed by the terminal device is the cell of the first relay node, that the cell accessed by the terminal device is the cell of the first relay node.
iii. The core network device directly determines, based on the indication information that is sent by the second donor node and that indicates that the cell currently accessed by the terminal device can support the service corresponding to the slice 1, that the slice list that is indicated by the TAC 2 and that is supported by the TA 2 includes {slice 2 and slice 3} is obtained from the NG interface message. However, the slice list that is obtained from the NG interface message and that is supported by the TAC 2 and the TA 2 includes {slice 2 and slice 3}. The core network device may determine that the cell accessed by the terminal device is the cell of the first relay node.

In this embodiment, when the RA and the first allowed NSSAI are sent to the terminal device:

In a first implementation solution, the first allowed NSSAI includes the identifier of the slice 1, and the RA includes the TA 2 identified by the TAC 2.

In a second implementation solution, the first allowed NSSAI includes the identifier of the slice 1, and the RA includes the TA 1 identified by the TAC 1. However, it should be noted that, in the second implementation solution, the RA that is in a context of the terminal device and that is actually stored by an AMF includes the TA 2 identified by the TAC 2.

Optionally, the core network device may further send the first allowed NSSAI to the second donor node, or request the second donor node to establish a PDU session associated with the first network slice.

Optionally, based on the first implementation solution and the second implementation solution in this step, the core network device may further send third information to the terminal device. The third information indicates that the slice 1 in the first allowed NSSAI is supported by the first relay node (which may also be referred to as supported by the cell of the first relay node). It should be understood that the cell accessed by the terminal device further broadcasts the indication information indicating that the cell is the cell of the first relay node and the corresponding TAC. Therefore, after receiving the third information, the terminal device may determine that the cell that is currently accessed is the cell controlled by the first relay node in the TA 2 and the first network slice in the first allowed NSSAI is supported by the cell.

In the communication method provided in this embodiment, when the donor node of the first relay node changes from the first donor node to the second donor node, because when the second donor node reports the position information of the terminal device to the core network device, the reported position information includes both the identifier TAC 1 of the TA 1 in which the terminal device is located when the donor node of the first relay node is the first donor node and the identifier TAC 2 of the TA 2 in which the terminal device is located when the donor node of the first relay node is the second donor node, in this way, the core network device may determine, with reference to the slice that is supported by the TA 1 and that is received by the NG interface, that the cell accessed by the terminal device can support the service corresponding to the slice 1, or determine, based on a direct indication, that the cell accessed by the terminal device can support the service corresponding to the slice 1. Therefore, the sent first allowed NSSAI includes the identifier of the slice 1, so that the terminal device successfully requests the service corresponding to the slice 1, thereby improving user experience.

Optionally, in this application, when the terminal device accessing the first relay node determines that the terminal device is an on-board UE and still accesses the cell controlled by the first relay node, a TAU does not need to be performed.

In addition, it should be understood that, for the terminal device accessing the first relay node, as the terminal device moves, the terminal device may further change from accessing a first cell of the first relay node to a second cell of another non-first relay node. In this case, if the terminal device requests a slice that can be supported by a TA corresponding to the second cell, the slice is not to be rejected.

In view of this, the communication method provided in this application further includes: initiating a tracking area update TAU when the cell accessed by the terminal device changes from the first cell of the first relay node to the second cell, where the first cell of the first relay node and the second cell are located in a same registration area RA, and the second cell does not belong to the first relay node.

Specifically, the initiating a tracking area update TAU includes: initiating the TAU when a system message broadcast by the second cell does not indicate that the second cell is a cell of the first relay node. It may be understood that, in this implementation solution, the terminal device may learn, with reference to the third information sent by the core network device, that the terminal device previously accesses the cell controlled by the first relay node in the TAC 2, but the broadcast message of the currently accessed second cell does not indicate that the second cell is the cell of the first relay node. Therefore, the terminal device may determine that the terminal device is located in another cell that is not controlled by the first relay node in the RA, and the TAU needs to be performed, so that a service corresponding to a network slice that is rejected in the cell of the first relay node but that can be supported by the TA to which the second cell belongs can be initiated again in the RA.

Optionally, the third information sent by the core network device to the terminal device may further include a cell list controlled by the first relay node. In this case, the terminal device may further obtain an identifier of the second cell from a broadcast message of the second cell, and then when determining that the second cell is not included in the cell list controlled by the first relay node, determine that the terminal device is located in another cell that is not controlled by the first relay node in the RA, and the TAU needs to be performed, so that a rejected network slice request in the cell of the first relay node can be initiated again in the RA.

In an optional embodiment, if the donor node of the first relay node changes from the first donor node to the second donor node due to MT migration in the first relay node, and the first relay node updates the TAC from the TAC 1 to the TAC 2 corresponding to the current area planned and deployed in the network, to improve the success rate of requesting the service corresponding to the first network slice (also referred to as the slice 1) by the on-board UE, in the embodiment shown in FIG. 6, when S603 and S604 remain unchanged, S601 may be replaced with the following: The first relay node may send, to the first donor node, the updated TAC 2 and the slice list that is supported by the TA 2 and that is indicated by the TAC 2. S602 may be replaced with the following: The first donor node sends, to the core network device, the TAC 2, the slice list that is supported by the TA 2 and that is indicated by the TAC 2, the TAC 1, and/or the slice list that is supported by the TA 1 and that is indicated by the TAC 1.

With reference to FIG. 5 and FIG. 6, the foregoing describes the communication method for improving the success rate of requesting the slice service by the terminal device (on-board UE).

It should be understood that when a donor node of a relay node accessed by the terminal device (on-board UE) changes from the first donor node to the second donor node, if the first donor node has established a PDU session for the terminal device, continuity of the PDU session having been established for the on-board UE is to be further ensured, to improve user experience.

In view of this, this application further provides two embodiments to describe how to ensure continuity of the PDU session having been established by the first donor node for the terminal device after the donor node of the first relay node changes from the first donor node to the second donor node.

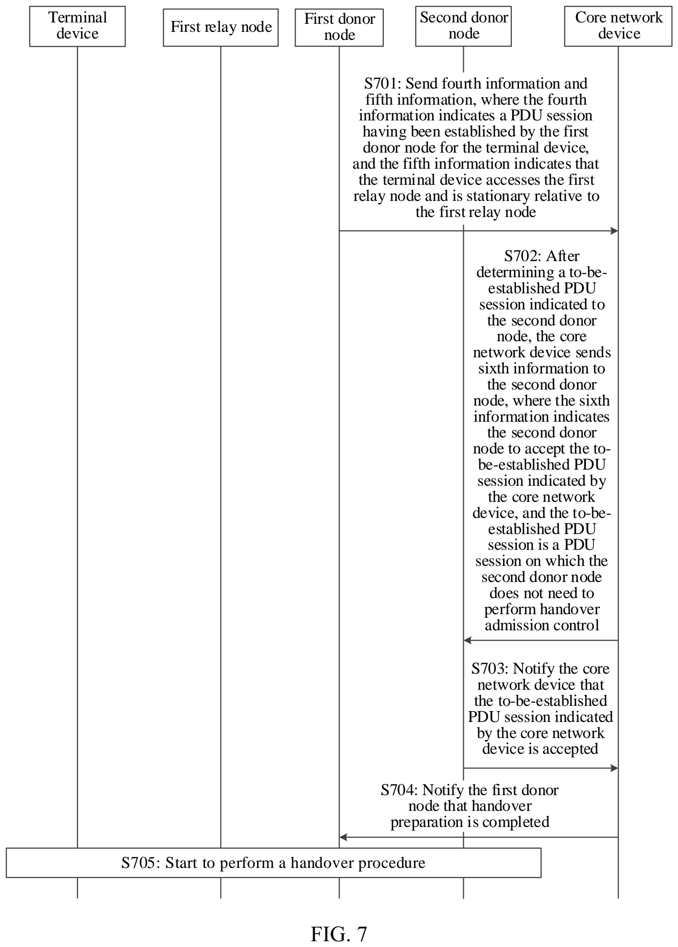

With reference to FIG. 7, the following first describes a first embodiment that is provided in this application and that ensures continuity of the PDU session having been established by the first donor node for the terminal device.

As shown in FIG. 7, a method for ensuring continuity of the PDU session having been established by the first donor node for the terminal device includes the following steps.

S701: The first donor node sends fourth information and fifth information to a core network device, where the fourth information indicates the PDU session having been established by the first donor node for the terminal device, and the fifth information indicates that the terminal device accesses the first relay node and is stationary relative to the first relay node.

In this embodiment, the terminal device initially accesses a cell of the first relay node, and successfully establishes a PDU session associated with a network slice. In an example, in this embodiment, the network slice associated with the PDU session successfully established by the terminal device is a slice 2.

During specific implementation of this embodiment, after the donor node of the first relay node changes from the first donor node to the second donor node, and the first relay node updates a TAC from a TAC 1 to a TAC 2 corresponding to a current area planned and deployed in a network, the first donor node sends the fourth information and the fifth information to the core network device.

The TAC 1 is an identifier of a TA 1 (that is, the first TA in the embodiment shown in FIG. 5) in which an on-board UE is located when the donor node of the first relay node is the first donor node, and the TAC 2 is an identifier of a TA 2 (that is, the second TA in the embodiment shown in FIG. 5) in which the on-board UE is located when the donor node of the first relay node is the second donor node.

The fifth information indicates that the terminal device accesses the first relay node and is stationary relative to the first relay node, that is, it may be considered that the terminal device is the on-board UE.

In an implementation, the fourth information and the fifth information may be carried in a same piece of signaling, or may be carried in different pieces of signaling. For example, the first donor node sends the fourth information and the fifth information to the core network device by using handover request signaling.

It should be noted herein that a specific form of the fifth information is not limited in this embodiment.

For example, the fifth information is in either of the following two forms: indicating that a reason for a handover request is distributed unit DU migration or mobile termination MT migration of the first relay node, and indicating that a cell in which the terminal device is located is the cell of the first relay node (that is, indicating that a source cell on which the terminal device camps is the cell of the first relay node) when a donor node of the first relay node is the first donor node.

S702: After determining a to-be-established PDU session indicated to the second donor node, the core network device sends sixth information to the second donor node, where the sixth information indicates the second donor node to accept the to-be-established PDU session indicated by the core network device, and the to-be-established PDU session is a PDU session on which the second donor node does not need to perform handover admission control.

In this embodiment, the to-be-established PDU session is included in the established PDU session. In other words, the established PDU session includes the to-be-established PDU session.

For example, in a possible scenario, the to-be-established PDU session is all PDU sessions having been established by the first donor node for the terminal device.

For example, in another possible scenario, the to-be-established PDU session is some PDU sessions in the established PDU sessions.

In this embodiment, when the core network device sends the sixth information to the second donor node, in an implementation, the core network device sends the sixth information to the second donor node by using handover request signaling. The sixth information may include a session identifier associated with the to-be-established PDU session and an identifier of a network slice (slice 2) that are indicated by the core network device.

In an optional embodiment, the sixth information may include the fifth information, that is, the sixth information carries indication information indicating that the terminal device is the on-board UE. In this way, after receiving the sixth information, the second donor node may learn that the terminal device is the on-board UE, and then determine that handover admission control does not need to be performed.

Optionally, the core network device may send second allowed NSSAI to the second donor node, where the second allowed NSSAI includes an identifier of a network slice associated with the to-be-established PDU session.

S703: The second donor node notifies the core network device that the to-be-established PDU session indicated by the core network device is accepted.

For example, the second donor node notifies, by using handover request response signaling, the core network device of the accepted to-be-established PDU session.

S704: The core network device notifies the first donor node that handover preparation is completed.

For example, the core network device notifies, by using handover command signaling, the first donor node that handover preparation is completed.

S705: The terminal device starts to perform a handover procedure.

Specifically, that the terminal device starts to perform a handover procedure means that a cell accessed by the terminal device changes to a cell of the first relay node when the first relay node is controlled by the second donor node.

In the communication method provided in this application, because the first donor node indicates, to the core network device by using the fifth information, that the terminal device is the on-board UE, the core network device may determine the to-be-established PDU session indicated to the second donor node. The to-be-established PDU session is a PDU session that does not require the second donor node to perform handover admission control, so that the second donor node directly allocates a resource to the to-be-established PDU session. It may be understood that, according to the technical solutions in this implementation, continuity of the PDU session of the terminal device can be ensured, thereby improving user experience.

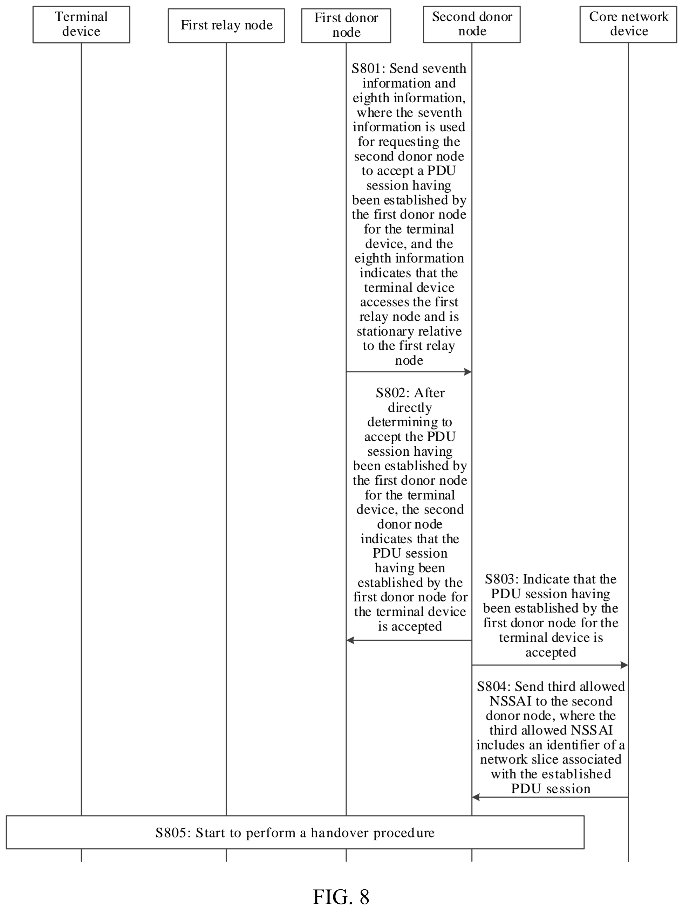

With reference to FIG. 8, the following describes a second embodiment that is provided in this application and that ensures continuity of the PDU session having been established by the first donor node for the terminal device.

As shown in FIG. 8, the communication method provided in this embodiment includes the following steps.

S801: The first donor node sends seventh information and eighth information to the second donor node, where the seventh information is used for requesting the second donor node to accept the PDU session having been established by the first donor node for the terminal device, and the eighth information indicates that the terminal device accesses the first relay node and is stationary relative to the first relay node.

In this embodiment, the terminal device initially accesses a cell of the first relay node, and successfully establishes a PDU session associated with a network slice.

In specific implementation of this embodiment, after the donor node of the first relay node changes from the first donor node to the second donor node, and the first relay node updates a TAC from a TAC 1 to a TAC 2 corresponding to a current area planned and deployed in a network, the first donor node sends the seventh information and the eighth information to the second donor node.

In an implementation, the seventh information and the eighth information may be carried in a same piece of signaling, or may be carried in different pieces of signaling.

For example, the first donor node sends the seventh information and the eighth information to the second donor node by using handover request signaling.

The eighth information indicates that the terminal device accesses the first relay node and is stationary relative to the first relay node, that is, it may be considered that the terminal device is an on-board UE.

It should be understood that a function of the eighth information herein is the same as a function of the fifth information in the embodiment shown in FIG. 7. A difference lies only in that the seventh information and the eighth information are sent by the first donor node to the second donor node.

For example, the eighth information has the following two possible forms:

In a first form, the eighth information indicates that a reason for a handover request is distributed unit DU migration or mobile termination MT migration of the first relay node.

In a second form, a cell in which the terminal device is located is a cell of the first relay node when the donor node of the first relay node is the first donor node.

S802: After directly determining to accept the PDU session having been established by the first donor node for the terminal device, the second donor node indicates, to the first donor node, that the PDU session having been established by the first donor node for the terminal device is accepted.

Specifically, in this step, logic of the second donor node directly determining to accept the PDU session having been established by the first donor node for the terminal device is as follows:
i. When the eighth information is in the first form in S801, the second donor node may determine that handover of the terminal device is triggered by DU migration or MT migration. Therefore, the second donor node may learn that the terminal device is an on-board UE, and directly determine to accept the PDU session having been established by the first donor node for the terminal device, and allocate a resource to the established PDU session.
ii. When the eighth information is in the second form in S801, because the second donor node may determine that the cell in which the terminal device is currently located is also the cell of the first relay node, that is, the terminal device is located in the cell of the first relay node before and after handover, it is determined that the terminal device is an on-board UE. Therefore, the second donor node may directly determine to accept the PDU session having been established by the first donor node for the terminal device, and allocate a resource to the established PDU session.

When the first donor node is indicated that the PDU session having been established by the first donor node for the terminal device is accepted, an implementation includes: indicating, by the second donor node to the first donor node by using handover request response signaling, that the PDU session having been established by the first donor node for the terminal device is accepted.

S803: The second donor node indicates, to a core network device, that the PDU session having been established by the first donor node for the terminal device is accepted.

For example, the second donor node indicates, to the core network device by using path handover request signaling, that the PDU session having been established by the first donor node for the terminal device is accepted.

S804: The core network device sends third allowed NSSAI to the second donor node, where the third allowed NSSAI includes an identifier of a network slice associated with the established PDU session.

For example, the core network device sends the third allowed NSSAI to the second donor node by using path handover response signaling.

S805: The terminal device starts to perform a handover procedure.

In the communication method provided in this application, the first donor node may send the seventh information and the eighth information to the second donor node, where the seventh information is used for requesting the second donor node to accept the PDU session having been established by the first donor node for the terminal device, and the eighth information indicates that the terminal device is an on-board UE. Correspondingly, after receiving the seventh information and the eighth information, the second donor node may determine that admission control does not need to be performed for handover of the on-board UE, and directly allocate a resource to the PDU session having been established for the terminal device. It may be understood that, according to the technical solutions in this implementation, continuity of the established PDU session of the terminal device can be ensured, thereby improving user experience.

Optionally, for the embodiments shown in FIG. 7 and FIG. 8, after the donor node of the first relay node changes from the first donor node to the second donor node, the second donor node/the core network device may alternatively perform handover admission on the UE based on a slice list actually supported by the first relay node. In other words, it is determined, according to a conventional technology, that a target cell can actually support a service of a first network slice. Therefore, an established PDU session associated with the first network slice can be admitted.

When a donor node of a relay node accessed by the terminal device (on-board UE) changes from the first donor node to the second donor node, if the first donor node has established the PDU session for the terminal device, it should be ensured that the PDU session having been established for the on-board UE is not interrupted, so that a slice service associated with the PDU session is not interrupted, thereby improving user experience.

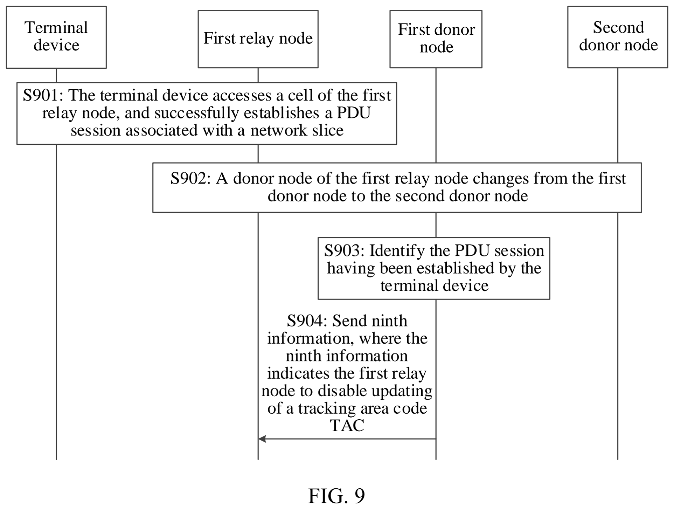

In view of this, this application further provides an embodiment with reference to FIG. 9, to describe an embodiment provided in this application in which the PDU session having been established by the first donor node for the terminal device is not interrupted.

As shown in FIG. 9, the communication method includes the following steps.

S901: The terminal device accesses a cell of a first relay node, and successfully establishes a PDU session associated with a network slice.

In this step, a current donor node of the first relay node is a first donor node. For example, in this embodiment, the network slice associated with the PDU session successfully established by the terminal device is a slice 2.

It should be noted herein that, in this application, that the terminal device accesses the cell of the first relay node may also be referred to as that the terminal device accesses a cell controlled by the first relay node, and this does not constitute a limitation on this application.

S902: A donor node of the first relay node changes from a first donor node to a second donor node.

S903: The first donor node identifies the PDU session having been established by the terminal device.

S904: The first donor node sends ninth information to the first relay node, where the ninth information indicates the first relay node to disable updating of a tracking area code TAC.

In an implementation, the first donor node may send the ninth information to an mIAB-DU.

In an optional embodiment, in this embodiment, after identifying that the PDU session has been established for the terminal device, the first donor node sends, to the second donor node only when further identifying that a second TA does not support the network slice associated with the established PDU session, the ninth indication information indicating the first relay node to disable updating of the TAC, where the second TA is a tracking area in which the terminal device is located when the donor node of the first relay node is the second donor node.

In this embodiment, the ninth information may further indicate a duration of disabling updating of the TAC in the first relay node. It may be understood that in this implementation, after receiving the ninth information, the terminal device not only knows that updating of the TAC needs to be disabled, but also knows the specific duration of disabling the updating. In other words, after the duration is exceeded, the first relay node may update the TAC based on network planning and deployment of a current area. Optionally, the ninth information may include a TAC of the current area.

It can be learned that, in the communication method provided in the embodiment shown in FIG. 9, after determining that the first relay node has allocated a resource to the PDU session of the terminal device, for example, has established a corresponding data radio bearer (data radio bearer, DRB), the first donor node indicates, to the first relay node, that updating the TAC is disabled, so that the first relay node does not update the TAC, and the established PDU session is not interrupted, thereby improving user experience.

Optionally, when the first relay node in the embodiment shown in FIG. 9 does not update the TAC of the first relay node based on planning and deployment, a surrounding UE may frequently initiate an TAU (the first relay node moves around the surrounding UE, and after accessing the cell of the first relay node, the surrounding UE needs to perform the TAU based on a TAC currently configured by the first relay node, and then when the first relay node moves out of the periphery of the surrounding UE, the surrounding UE further needs to perform the TAU again based on a TAC of a current cell on which the surrounding UE camps).

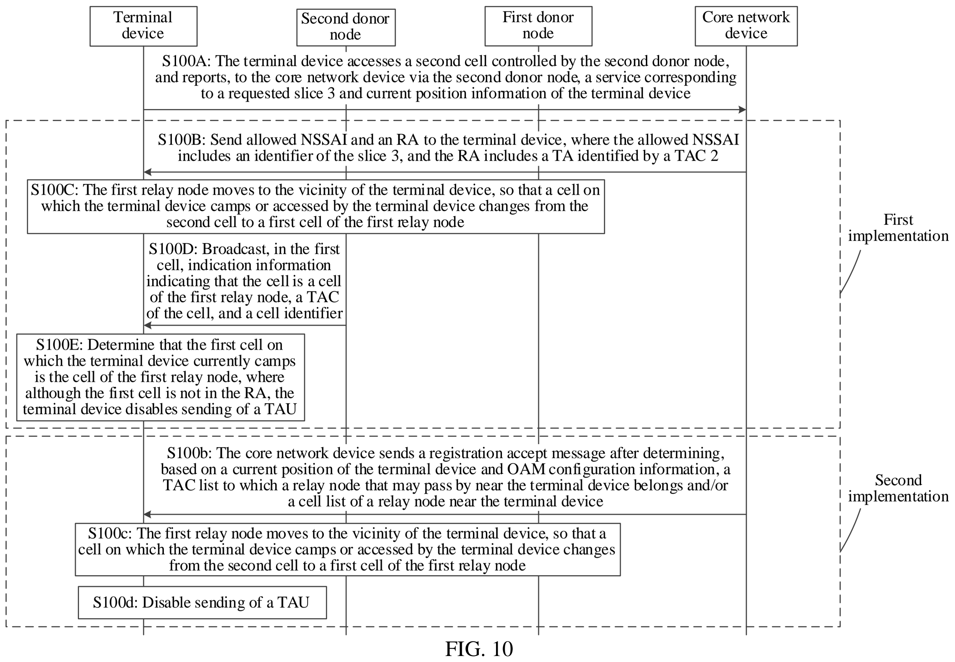

In view of this, with reference to FIG. 10, the following uses an example in which the surrounding UE requests a slice 3 supported by the second TA, to describe how to reduce impact on the surrounding UE when the first relay node does not update the TAC of the first relay node based on planning and deployment. As shown in FIG. 10, the method includes the following steps.

S100A: A terminal device accesses a second cell controlled by a second donor node, and reports, to a core network device via the second donor node, a service corresponding to the requested slice 3 and current position information of the terminal device.

Specifically, in this embodiment, the terminal device refers to a surrounding UE (surrounding UE).

Then, for different types of surrounding UEs, there are two possible implementations:

In a first implementation, the method includes:

S100B: The core network device sends allowed NSSAI and an RA to the terminal device, where the allowed NSSAI includes an identifier of the slice 3, and the RA includes a TA identified by a TAC 2.

The TAC 2 is an identifier of a TA in which the surrounding UE is located. In this embodiment, the TA in which the surrounding UE is located is the second TA in which the surrounding UE is located when the donor node of the first relay node is the second donor node.

During specific implementation, the core network device may send the allowed NSSAI and the RA to the terminal device by using a NAS message.

S100C: The first relay node moves to the vicinity of the terminal device, so that a cell on which the terminal device camps or accessed by the terminal device changes from the second cell to a first cell of the first relay node.

S100D: The second donor node broadcasts, in the first cell, indication information indicating that the cell is a cell of the first relay node, a TAC of the cell, and a cell identifier.

S100E: The terminal device determines that the first cell on which the terminal device currently camps is the cell of the first relay node, where although the first cell is not in the RA, the terminal device disables sending of a TAU.

In a second implementation, the method includes:

S100b: The core network device sends a NAS message to the terminal device after the core network device determines, based on a current position of the terminal device and OAM configuration information, a TAC list to which a relay node that may pass by near the terminal device belongs and/or a cell list of a relay node near the terminal device.

In this embodiment, an example in which the NAS message is a registration accept message is used, but this does not constitute a limitation on this application.

Specifically, in this step, carried content has the following two possibilities:
In a first form, the registration accept message includes a TAC list to which a relay node that passes near a surrounding UE belongs and/or the cell list of the relay node near the terminal device.

During specific implementation, the NAS message may be directly sent to the terminal device, or may be first sent to the second donor node, and then sent to the terminal device by the second donor node by using an RRC message.

In a second form, the determined TAC list to which the relay node that passes near the surrounding UE belongs and/or the determined cell list of the relay node near the terminal device are/is added to the RA configured for the UE, and then the allowed NSSAI and the RA are sent to the UE, where the allowed NSSAI includes the slice 3, and the RA includes a TA 2 identified by a TAC 2 and a TA 1 identified by a TAC 1 and/or a cell identifier in the TA 1.

In this embodiment, the TAC 1 belongs to the TAC list of the relay node that passes nearby, and a cell in the TA 1 identified by the TAC 1 belongs to the cell list of the relay node that passes nearby.

S100c: The first relay node moves to the vicinity of the terminal device, so that a cell on which the terminal device camps or accessed by the terminal device changes from the second cell to a first cell of the first relay node.

The first cell broadcasts indication information indicating that the first cell is the cell of the first relay node, a TAC of the cell, and a cell identifier.

The indication information indicates that the first cell is the first relay node may be considered as indicating that the first cell belongs to the first relay node.

S100d: The terminal device determines to disable sending of a TAU.

For the first form in S100b, after camping on or accessing the cell of the first relay node, the terminal device determines that the TAC or the cell identifier of the cell of the first relay node is in information pre-provided by the core network device, and therefore does not initiate a TAU request.

For the second form in S100b, after camping on or accessing the cell of the first relay node, the terminal device determines that the TAC or the cell identifier of the cell of the first relay node is in the RA, and therefore does not initiate a TAU request.

It should be understood that, in the communication method provided in FIG. 10, if the first relay node is providing a slice service for an on-board UE, the first donor node instructs the first relay node not to temporarily update a TAC based on deployment of an area in which the first relay node is located, thereby ensuring service continuity of the on-board UE, reducing frequent TAU initiation by the surrounding UE due to mIAB movement, and reducing unnecessary power consumption of the surrounding UE.

In an implementation, the second implementation in the embodiment shown in FIG. 10 may be applicable to a case in which the first relay node moves in a fixed trajectory.

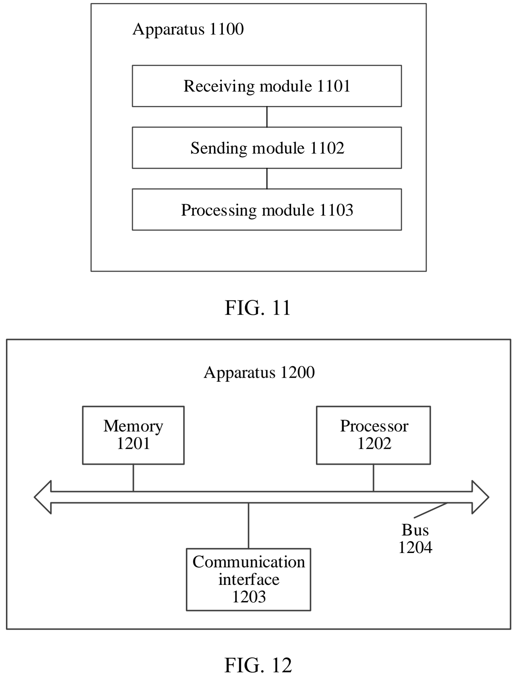

The foregoing describes in detail the communication methods in embodiments of this application with reference to FIG. 5 to FIG. 10. The following describes in detail a communication apparatus provided in this application with reference to FIG. 11 and FIG. 10.

FIG. 11 is a diagram of a structure of a communication apparatus according to an embodiment of this application. Specifically, as shown in FIG. 11, an apparatus 1100 includes a receiving module 1101 and a sending module 1102.

In a first embodiment, the communication apparatus is used in a core network device.

The receiving module 1101 is configured to receive first information from a terminal device, where the first information is used for requesting a service corresponding to a first network slice, and the terminal device accesses a first relay node; the receiving module 1101 is further configured to receive second information from a second donor node, where the second information indicates that the first relay node supports the first network slice, the first network slice is not supported by a second tracking area TA, and a tracking area in which the terminal device is located is the second TA when a donor node of the first relay node is the second donor node; and the sending module 1102 is configured to send first allowed network slice selection assistance information NSSAI to the terminal device and/or the second donor node, where the first allowed NSSAI includes an identifier of the first network slice.

In a possible implementation, the second information may include at least one of the following information: a first area identifier, a second area identifier, a network slice supported by a first TA, and a network slice supported by the second TA, where the first area identifier indicates the first TA, the second area identifier indicates the second TA, the tracking area in which the terminal device is located is the first TA when the donor node of the first relay node is a first donor node, and the network slice supported by the first TA includes the first network slice.

In a possible implementation, the first area identifier is a tracking area code TAC and/or a tracking area identity TAI of the first TA, and the second area identifier is a TAC and/or a TAI of the second TA.

In a possible implementation, the sending module 1102 is further configured to send third information to the terminal device, where the third information indicates that the first network slice is supported by the first relay node.

In a possible implementation, the receiving module 1101 is used for the core network device to receive fourth information from the first donor node, where the fourth information indicates a protocol data unit PDU session having been established by the first donor node for the terminal device; the receiving module 1101 is further configured to receive fifth information from the first donor node, where the fifth information indicates that the terminal device accesses a first relay node and is stationary relative to the first relay node; and the sending module 1102 is further configured to send sixth information to the second donor node, where the sixth information indicates the second donor node to accept a to-be-established PDU session indicated by a core network device, and the established PDU session includes the to-be-established PDU session.

In a possible implementation, the sending module 1102 is further configured to send second allowed NSSAI to the second donor node, where the second allowed NSSAI includes an identifier of a network slice associated with the to-be-established PDU session of the first donor node.

In a possible implementation, the fifth information is in either of the following two forms: indicating that a reason for a handover request is distributed unit DU migration or mobile termination MT migration of the first relay node, and indicating that a cell in which the terminal device is located is a cell of the first relay node when a donor node of the first relay node is the first donor node.

In a second embodiment, the communication apparatus is used in a terminal device.

Specifically, the sending module 1102 is configured to send first information to a core network device, where the first information is used for requesting a service corresponding to a first network slice, and a terminal device accesses a first relay node; and the receiving module is configured to receive first allowed network slice selection assistance information NSSAI from the core network device, where the first allowed NSSAI includes an identifier of the first network slice, where the first network slice is not supported by a second tracking area TA, and a tracking area in which the terminal device is located is the second TA when a donor node of the first relay node is a second donor node.

In a possible implementation, the receiving module 1101 is further configured to receive third information from the core network device, where the third information indicates that the first network slice is supported by the first relay node.

In a possible implementation, when a cell accessed by the terminal device changes from a first cell of the first relay node to a second cell, the sending module 1102 is further configured to initiate a tracking area update TAU, where the first cell of the first relay node and the second cell are located in a same registration area RA, and the second cell does not belong to the first relay node.

In a possible implementation, the sending module 1102 specifically initiates the TAU when a system message broadcast by the second cell does not indicate that the second cell is a cell of the first relay node.

In a third embodiment, the communication apparatus is used in a second donor node.

Specifically, the sending module 1102 is configured to send second information to a core network device, where the second information indicates that a first relay node supports a first network slice, and the first network slice is not supported by a second tracking area TA; and the receiving module 1101 is configured to receive first allowed network slice selection assistance information NSSAI from the core network device, where the first allowed NSSAI includes an identifier of the first network slice, where a service corresponding to the first network slice is a service requested by a terminal device from the core network device, the terminal device accesses the first relay node, and a tracking area in which the terminal device is located is the second TA when a donor node of the first relay node is a second donor node.

In a possible implementation, the second information may include at least one of the following information: a first area identifier, a second area identifier, a network slice supported by a first TA, and a network slice supported by the second TA, where the first area identifier indicates the first TA, the second area identifier indicates the second TA, the tracking area in which the terminal device is located is the first TA when the donor node of the first relay node is a first donor node, and the network slice supported by the first TA includes the first network slice.

In a possible implementation, the first area identifier is a tracking area code TAC and/or a tracking area identity TAI of the first TA, and the second area identifier is a TAC and/or a TAI of the second TA.

In a possible implementation, the communication apparatus further includes a processing module 1103. The receiving module 1101 is further configured to receive sixth information from the core network device, where the sixth information indicates the second donor node to accept a to-be-established protocol data unit PDU session indicated by the core network device, and PDU sessions having been established by the first donor node for the terminal device include the to-be-established PDU session; and the processing module 1103 is configured to determine to receive the to-be-established PDU session.

In a possible implementation, the receiving module 1101 is further configured to receive second allowed NSSAI from the core network device, where the second allowed NSSAI includes the identifier of the network slice associated with the established PDU session.

In a fourth embodiment, the communication apparatus is used in a first donor node.

Specifically, the sending module 1102 is configured to send fourth information to a core network device, where the fourth information indicates a protocol data unit PDU session having been established by the first donor node for a terminal device; and the sending module 1102 is configured to send fifth information to the core network device, where the fifth information indicates that the terminal device accesses a first relay node and is stationary relative to the first relay node.

In a possible implementation, the fifth information is in either of the following two forms: indicating that a reason for a handover request is distributed unit DU migration or mobile termination MT migration of the first relay node, and indicating that a cell in which the terminal device is located is a cell of the first relay node when a donor node of the first relay node is the first donor node.

In a fifth embodiment, the communication apparatus is used in a second donor node.

Specifically, the receiving module 1101 is configured to receive fourth information sent by a first donor node, where the fourth information indicates a protocol data unit PDU session having been established by the first donor node for a terminal device; the receiving module 1101 is further configured to receive fifth information from the first donor node, where the fifth information indicates that the terminal device accesses a first relay node and is stationary relative to the first relay node; and the sending module 1102 is configured to send sixth information to the second donor node, where the sixth information indicates the second donor node to accept a to-be-established PDU session indicated by a core network device, and the established PDU session includes the to-be-established PDU session.

In a possible implementation, the sending module 1102 is further configured to send second allowed NSSAI to the second donor node, where the second allowed NSSAI includes an identifier of a network slice associated with the PDU session that has been established by the first donor node for the terminal device.

In a possible implementation, the fifth information is in either of the following two forms: indicating that a reason for a handover request is distributed unit DU migration or mobile termination MT migration of the first relay node, and indicating that a cell in which the terminal device is located is a cell of the first relay node when a donor node of the first relay node is the first donor node.

In a sixth embodiment, the communication apparatus is used in a first donor node.

Specifically, in the sixth embodiment, the sending module 1102 is configured to send seventh information to a second donor node, where the seventh information is used for requesting the second donor node to accept a protocol data unit PDU session having been established by a first donor node for a terminal device; and the sending module 1102 is further configured to send eighth information to the second donor node, where the eighth information indicates that the terminal device accesses a first relay node and is stationary relative to the first relay node.

For example, the eighth information is in either of the following two forms: indicating that a reason for a handover request is distributed unit DU migration or mobile termination MT migration of the first relay node, and indicating that a cell in which the terminal device is located is a cell of the first relay node when a donor node of the first relay node is the first donor node.

In a seventh embodiment, the communication apparatus is used in a second donor node. In addition, in the seventh embodiment, the communication apparatus further includes a processing module 1103.

Specifically, in the seventh embodiment, the receiving module 1101 is configured to receive seventh information sent by a first donor node, where the seventh information is used for requesting the second donor node to accept a protocol data unit PDU session having been established by a first donor node for a terminal device; the receiving module 1101 is further configured to receive eighth information from the first donor node, where the eighth information indicates that the terminal device accesses a first relay node and is stationary relative to the first relay node; and the processing module 1103 is configured to determine to receive the established PDU session.

In a possible implementation, the eighth information is in either of the following two forms: indicating that a reason for a handover request is distributed unit DU migration or mobile termination MT migration of the first relay node, and indicating that a cell in which the terminal device is located is a cell of the first relay node when a donor node of the first relay node is the first donor node.

In a possible implementation, the receiving module 1101 is further configured to receive third allowed network slice selection assistance information NSSAI from a core network device, where the third allowed NSSAI includes the identifier of the network slice associated with the established PDU session.

In an eighth embodiment, the communication apparatus is used in a first donor node.

Specifically, in the eighth embodiment, the processing module 1103 is configured to determine that a protocol data unit PDU session has been established for a terminal device accessing the first relay node, where a donor node of the first relay node is the first donor node, and the first relay node is deployed in a mobile device and moves with the mobile device; and the sending module 1102 is configured to send ninth information to the first relay node, where the ninth information indicates the first relay node to disable to update a tracking area code TAC.

Optionally, the sending module 1102 specifically sends the ninth information to the first relay node when the network slice associated with the PDU session is not supported by the second TA.

In a possible implementation, the ninth information further indicates a duration of disabling update of the TAC in the first relay node.

Optionally, the ninth information includes a tracking area code TAC of a second TA, and the second TA is a tracking area in which the terminal device is located when the donor node of the first relay node is the second donor node.

In a ninth embodiment, the communication apparatus is used in a terminal device.

Specifically, in the ninth embodiment, the sending module 1102 is configured to: when a cell accessed by the terminal device changes from a second cell to a first cell of a first relay node, disable sending of a tracking area update TAU, where the second cell does not belong to the first relay node, and may be a static cell on the ground, the first relay node is deployed in a mobile device and moves with the mobile device, and the terminal device is not stationary relative to the first relay node.

In a possible implementation, the sending module 1102 specifically disables sending the TAU when a system message broadcast by a first cell is received, where the system message broadcast by the first cell includes indication information indicating that the first cell is a cell of the first relay node and a TAC of the first cell.

In a possible implementation, the receiving module 1101 is configured to receive tenth information sent by a core network device, where the tenth information indicates a tracking area code TAC list to which a relay node near the terminal device belongs and/or a cell list of the relay node near the terminal device; and correspondingly, the sending module 1102 is further configured to disable sending of the TAU when the TAC of the first cell or a cell identifier of the first cell is included in content indicated by the tenth information.

In a possible implementation, the receiving module 1101 is configured to receive a registration area RA sent by a core network device, where the RA includes a TAC list of a relay node near the terminal device and/or a cell list of the relay node near the terminal device; and correspondingly, the sending module 1102 is further configured to disable sending of the TAU when it is determined that the TAC of the first cell or the cell identifier of the first cell is in the RA.

FIG. 12 is a diagram of a structure of a communication apparatus according to another embodiment of this application. The apparatus shown in FIG. 12 may be configured to perform the method in any one of the foregoing embodiments.

As shown in FIG. 12, the apparatus 1200 in this embodiment includes a memory 1201 and a processor 1202. Optionally, the apparatus 1200 further includes a communication interface 1203 and a bus 1204. A communication connection is implemented between the memory 1201, the processor 1202, and the communication interface 1203 through the bus 1204.

The memory 1201 may be a read-only memory (read-only memory, ROM), a static storage device, a dynamic storage device, or a random access memory (random access memory, RAM). The memory 1201 may store a program. When the program stored in the memory 1201 is executed by the processor 1202, the processor 1202 is configured to perform the steps of the methods shown in FIG. 5 to FIG. 10.

The processor 1202 may be a general-purpose central processing unit (central processing unit, CPU), a microprocessor, an application specific integrated circuit (application specific integrated circuit, ASIC), or one or more integrated circuits, and is configured to execute a related program, to implement the methods shown in FIG. 5 to FIG. 10 in this application.

The processor 1202 may alternatively be an integrated circuit chip and has a signal processing capability. In an implementation process, the steps of the methods in FIG. 5 to FIG. 10 in embodiments of this application may be completed by using an integrated logic circuit of hardware in the processor 1202 or instructions in a form of software.

The processor 1202 may alternatively be a general-purpose processor, a digital signal processor (digital signal processor, DSP), an application specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory 1201. The processor 1202 reads information in the memory 1201, and completes, in combination with hardware of the processor 1202, functions that need to be performed by units included in the apparatus in this application. For example, the processor 1202 may perform steps/functions in embodiments shown in FIG. 5 to FIG. 10.

The communication interface 1203 may use, but is not limited to, a transceiver apparatus like a transceiver, to implement communication between the apparatus 1200 and another device or a communication network.

The bus 1204 may include a path for sending information between components (for example, the memory 1201, the processor 12202, and the communication interface 1203) of the apparatus 1200.

It should be understood that the apparatus 1200 shown in this embodiment of this application may be an electronic device, or may be a chip configured in an electronic device. The apparatus 1200 may be deployed in a terminal device, or may be deployed in a network device.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be sent from a computer-readable storage medium to another computer-readable storage medium. For example, the computer instructions may be sent from a website, computer, server, or data center to another website, computer, server, or data center in a wired (for example, infrared, radio, and microwave, or the like) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and indicates that three relationships may exist. For example, A and/or B may represent the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation is outside of the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, for example, a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first information from a terminal device, wherein the first information is used for requesting a service corresponding to a first network slice, and the terminal device accesses a first relay node;
receiving second information from a second donor node, wherein the second information indicates that the first relay node supports the first network slice, the first network slice is not supported by a second tracking area TA, and a tracking area in which the terminal device is located is the second TA when a donor node of the first relay node is the second donor node; and
sending first allowed network slice selection assistance information NSSAI to the terminal device and/or the second donor node, wherein the first allowed NSSAI comprises an identifier of the first network slice.

2. The method according to claim 1, wherein the second information comprises at least one of the following information: a first area identifier, a second area identifier, a network slice supported by a first TA, and a network slice supported by the second TA, wherein
the first area identifier indicates the first TA, the second area identifier indicates the second TA, the tracking area in which the terminal device is located is the first TA when the donor node of the first relay node is a first donor node, and the network slice supported by the first TA comprises the first network slice.

3. The method according to claim 2, wherein the first area identifier is a tracking area code TAC and/or a tracking area identity TAI of the first TA, and the second area identifier is a TAC and/or a TAI of the second TA.

4. The method according to any one of claims 1 to 3, wherein the method further comprises:
sending third information to the terminal device, wherein the third information indicates that the first network slice is supported by the first relay node.

5. The method according to any one of claims 2 to 4, wherein the method further comprises:
receiving fourth information from the first donor node, wherein the fourth information indicates a protocol data unit PDU session having been established by the first donor node for the terminal device;
receiving fifth information from the first donor node, wherein the fifth information indicates that the terminal device accesses the first relay node and is stationary relative to the first relay node; and
sending sixth information to the second donor node, wherein the sixth information indicates the second donor node to accept a to-be-established PDU session indicated by a core network device, wherein
the established PDU session comprises the to-be-established PDU session.

6. The method according to claim 5, wherein the method further comprises:
sending second allowed NSSAI to the second donor node, wherein the second allowed NSSAI comprises an identifier of a network slice associated with the to-be-established PDU session.

7. The method according to claim 5 or 6, wherein the fifth information is in either of the following two forms: indicating that a reason for a handover request is distributed unit DU migration or mobile termination MT migration of the first relay node, and indicating that a cell in which the terminal device is located is a cell of the first relay node when the donor node of the first relay node is the first donor node.

8. A communication method, comprising:
sending first information to a core network device, wherein the first information is used by a terminal device to request a service corresponding to a first network slice, and the terminal device accesses a first relay node; and
receiving first allowed network slice selection assistance information NSSAI from the core network device, wherein the first allowed NSSAI comprises an identifier of the first network slice, wherein
the first network slice is not supported by a second tracking area TA, and a tracking area in which the terminal device is located is the second TA when a donor node of the first relay node is a second donor node.

9. The method according to claim 8, wherein the method further comprises:
receiving third information from the core network device, wherein the third information indicates that the first network slice is supported by the first relay node.

10. The method according to claim 9, wherein when a cell accessed by the terminal device changes from a first cell of the first relay node to a second cell, the method further comprises:
initiating a tracking area update TAU, wherein
the first cell of the first relay node and the second cell are located in a same registration area RA, and the second cell does not belong to the first relay node.

11. The method according to claim 10, wherein the initiating the tracking area update TAU comprises:
initiating the TAU when a system message broadcast by the second cell does not indicate that the second cell is a cell of the first relay node.

12. A communication method, comprising:
sending seventh information to a second donor node, wherein the seventh information is used for requesting the second donor node to accept a protocol data unit PDU session having been established by a first donor node for a terminal device, and the seventh information comprises a session identifier and an identifier of a network slice that are associated with the established PDU session; and
sending eighth information to the second donor node, wherein the eighth information indicates that the terminal device accesses a first relay node and is stationary relative to the first relay node.

13. The method according to claim 12, wherein the eighth information is in either of the following two forms: indicating that a reason for a handover request is distributed unit DU migration or mobile termination MT migration of the first relay node, and indicating that a cell in which the terminal device is located is a cell of the first relay node when a donor node of the first relay node is the first donor node.

14. A communication method, wherein the method comprises:
receiving seventh information sent by a first donor node, wherein the seventh information is used for requesting a second donor node to accept a protocol data unit PDU session having been established by the first donor node for a terminal device, and the seventh information comprises a session identifier and an identifier of a network slice that are associated with the established PDU session;
receiving eighth information from the first donor node, wherein the eighth information indicates that the terminal device accesses a first relay node and is stationary relative to the first relay node; and
determining to accept the established PDU session.

15. The method according to claim 14, wherein the eighth information is in either of the following two forms: indicating that a reason for a handover request is distributed unit DU migration or mobile termination MT migration of the first relay node, and indicating that a cell in which the terminal device is located is a cell of the first relay node when a donor node of the first relay node is the first donor node.

16. The method according to claim 14 or 15, wherein the method further comprises:
receiving third allowed network slice selection assistance information NSSAI from a core network device, wherein the third allowed NSSAI comprises the identifier of the network slice associated with the established PDU session.

17. A communication apparatus, comprising a processor, wherein the processor is coupled to a memory;
the memory is configured to store program instructions; and
the processor is configured to invoke the program instructions in the memory to perform the method according to any one of claims 1 to 7, claims 8 to 11, claims 12 and 13, or claims 14 to 16.

18. A computer-readable medium, wherein the computer-readable medium stores program code to be executed by a computer, and the program code comprises instructions for performing the method according to any one of claims 1 to 7, claims 8 to 11, claims 12 and 13, or claims 14 to 16.

19. A computer program product, wherein the computer program product comprises computer program code, and when the computer program code runs on a computer, the computer is enabled to implement the method according to any one of claims 1 to 7, claims 8 to 11, claims 12 and 13, or claims 14 to 16.
